# EUROPÄISCHE PATENTSCHRIFT

(11) **EP 3 349 079 B1**
(45) Veröffentlichungstag und Bekanntmachung des Hinweises auf die Patenterteilung: **04.09.2024**
(21) Anmeldenummer: 17151288.2
(22) Anmeldetag: 12.01.2017
(51) Int. Cl.: G05B 15/02, G05B 19/042

(54) **VERFAHREN ZUR ANPASSUNG EINES BETRIEBS WENIGSTENS EINES TÜRSYSTEMS**
METHOD FOR ADAPTING AN OPERATION OF AT LEAST ONE DOOR SYSTEM
PROCÉDÉ D'ADAPTATION D'UN FONCTIONNEMENT D'AU MOINS UN SYSTÈME DE PORTE

(43) Veröffentlichungstag der Anmeldung: 18.07.2018
(73) Patentinhaber: dormakaba Deutschland GmbH, 58256 Ennepetal (DE)
(72) Erfinder: Wulbrandt, Tim, 58256 Ennepetal (DE); Wegner, Frank, 58256 Ennepetal (DE)
(74) Vertreter: Balder IP Law, S.L.

(56) Entgegenhaltungen:
- US-A1- 2013 117 078
- US-A1- 2013 321 127
- US-A1- 2013 346 300
- US-A1- 2014 125 499

## Beschreibung

Die vorliegende Erfindung betrifft ein Verfahren zur Anpassung eines Betriebs wenigstens eines Türsystems. Ferner bezieht sich die Erfindung auf ein Anpassungssystem.

Aus dem Stand der Technik sind diverse Bauformen für Türsysteme bekannt. So kann das Türsystem eine Anschlagtür, eine Schiebetür, eine (Karussell-) Drehtür, oder dergleichen umfassen. Auch ist es bekannt, dass eine Antriebseinheit bei dem Türsystem vorgesehen sein kann, um eine Türkomponente (wie das Türblatt) als bewegliches Teil des Türsystems für eine Bewegung anzutreiben. Auf diese Weise kann (zumindest teil-) automatisiert ein Öffnen und Schließen der Türkomponente bewirkt werden. Grundsätzlich kann ein solcher Antrieb der Türkomponente bei sämtlichen Bauformen eingesetzt werden, um die Bewegung der Türkomponente zumindest teilweise zu automatisieren und/oder zu unterstützen.

Das Türsystem wird dabei üblicherweise von diversen Antriebsparametern mittelbar oder unmittelbar beeinflusst. Bspw. können Antriebsparameter, wie die Nutzungshäufigkeit (Nutzungszyklus), für den Betrieb der Tür funktional relevant sein. Auch kann es möglich sein, dass die Antriebsparameter in einer bestimmten Konstellation zur funktionalen Beeinträchtigung des Türsystems führen. Oft erfolgt nach einer gewissen Zeitdauer oder bei einer bestimmten Nutzungshäufigkeit daher eine Wartung des Türsystems. Auch kann es möglich sein, dass einige der Antriebsparameter durch eine manuelle Konfiguration des Türsystems Berücksichtigung finden, bspw. wenn eine Programmierung einer Zeit zum Öffnen und/oder zum Schließen des Türsystems erfolgt.

Derartige Türsysteme sind aus Druckschriften US 2013/321127 A und US 2014/125499 A1 bekannt.

Oft stellt hierbei allerdings der Betrieb des Türsystems eine technische Herausforderung dar, insbesondere ist die Wartung und/oder Konfiguration des Türsystems technisch aufwendig und komplex. So müssen bspw. Antriebsparameter, wie eine Fehlerinformation, aufwendig am Türsystem ermittelt werden. Weiter müssen ggf. zur Programmierung manuell Anpassungsvorgaben und/oder Konfigurationsvorgaben bestimmt werden und anschließend ein Gerät zur Konfiguration und/oder Programmierung mit dem Türsystem verbunden werden. Zudem ist ein Problem, dass ggf. die Bestimmung der Anpassungs- und/oder Konfigurationsvorgaben zu unpräzise und/oder unpassend erfolgt, insbesondere dann, wenn eine hinreichende Einschätzung der relevanten Antriebsparameter erschwert ist. Damit ist ein herkömmliches Türsystem in einem solchen Fall oft nur kostenaufwendig und/oder technisch aufwendig einsetzbar.

Es ist daher eine Aufgabe der vorliegenden Erfindung, die voranstehenden Probleme zumindest teilweise zu beheben. Insbesondere ist es eine Aufgabe der Erfindung, einen verbesserten und/oder kostengünstigeren und/oder einfacheren und/oder zuverlässigeren Betrieb eines Türsystems zu ermöglichen.

Die voranstehende Aufgabe wird gelöst durch ein Verfahren mit den Merkmalen des Anspruchs 1 und durch ein Anpassungssystem mit den Merkmalen des Anspruchs 9.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Anpassungssystem, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Anpassung eines Betriebs wenigstens eines Türsystems. Hierbei ist insbesondere vorgesehen, dass das Türsystem wenigstens eine zumindest teilweise automatisiert betriebene Türkomponente zur Durchführung mindestens einer Türfunktion, vorzugsweise ein Öffnen und/oder Schließen der Türkomponente, aufweist.

Erfindungsgemäß ist vorgesehen, dass nachfolgende Schritte durchgeführt werden, wobei vorzugsweise die Schritte nacheinander oder in beliebiger Reihenfolge durchgeführt werden, wobei bevorzugt einzelne Schritte auch wiederholt durchgeführt werden können:
- Übertragen von zumindest einem Antriebsparameter, wobei vorzugweise der (zumindest eine) Antriebsparameter dabei kabellos übertragen wird,
- Auswerten zumindest des übertragenen Antriebsparameters, sodass insbesondere eine Anpassungsvorgabe bestimmt wird, durch eine Auswerteeinheit (bspw. des Speichersystems)
- Anpassen der mindestens einen Türfunktion anhand der Anpassungsvorgabe, durch eine Kontrolleinheit.

Dies hat den Vorteil, dass in einfacher und kostengünstiger Weise der Betrieb anhand der Antriebsparameter angepasst werden kann. Bspw. kann dabei auch die Anpassungsvorgabe eine Konfigurationsvorgabe umfassen, bspw. eine Folge von Anweisungen zur Kontrolle der Türfunktion. Dabei ist es denkbar, dass das (zumindest teilweise kabellose) Übertragen des wenigstens einen Antriebsparameters zunächst ein Aussenden, dann ggf. ein Übermitteln (bspw. durch Übermittlungsstationen, wie Repeater, Server oder dergleichen) und dann ein Empfangen des Antriebsparameters umfassen kann. Insbesondere kann dabei das Aussenden und/oder das Übermitteln und/oder das Empfangen jeweils zumindest teilweise kabellos erfolgen, bspw. über (Mobil-) Funk. Auch kann das Aussenden und/oder das Übermitteln und/oder das Empfangen jeweils zumindest teilweise kabelgebunden erfolgen, bspw. über ein Ethernet-Netzwerk. Auch kann es möglich sein, dass die Übertragung bzw. das Übermitteln über variierende Übertragungswege erfolgt, bspw. über Internet-Server. Dies ermöglicht eine flexible und zuverlässige Übertragung der Antriebsparameter. Das Aussenden erfolgt dabei bspw. durch ein Türsystem und das Empfangen durch ein Speichersystem, um bspw. Antriebsparameter von dem Türsystem (oder auch mehreren Türsystemen) im Speichersystem zu sammeln und/oder zu speichern. Alternativ oder zusätzlich erfolgt das Aussenden durch das Speichersystem und das Empfangen durch das Türsystem, um bspw. Antriebsparameter, welche beim Speichersystem generiert werden, zur Kontrolle des Türsystems zu nutzen.

Insbesondere kann das Auswerten im Speichersystem erfolgen, bspw. anhand einer Datenbank und/oder durch eine Auswerteeinheit, oder direkt im Türsystem, bspw. durch eine Verarbeitungskomponente, oder ggf. durch eine Kommunikationseinheit. Bspw. kann beim Übertragen eine Erkennungseinheit und/oder Übertragungseinheit des Türsystems den wenigstens einen Antriebsparameter von dem Speichersystem empfangen.

Alternativ oder zusätzlich ist es denkbar, dass der wenigstens eine Antriebsparameter und/oder weitere Antriebsparameter von dem Speichersystem empfangen und/oder gespeichert wird/werden, bspw. von dem Türsystem und/oder weiteren Türsystemen.

Dabei weist das Türsystem auf:
- wenigstens eine Türkomponente, insbesondere eine Tür oder ein Türblatt, wobei vorzugsweise die Türkomponente beweglich gelagert ist,
- wenigstens eine Antriebseinheit, wobei die Antriebseinheit mit der Türkomponente in Wirkverbindung steht, um die Türkomponente zur Durchführung wenigstens einer Türfunktion in wenigstens einen Bewegungszustand zu bringen,
- wenigstens eine Erkennungseinheit zum Bestimmen von wenigstens einem Antriebsparameter, wobei vorzugsweise der Antriebsparameter mit der Türfunktion korreliert ist,
- wenigstens eine Kontrolleinheit zur Kontrolle (d. h. insbesondere Initiierung und/oder Steuerung und/oder Regelung) zumindest der Antriebseinheit und/oder zumindest der Türfunktion,

Insbesondere kann das Türsystem zumindest eine der nachfolgenden Komponenten bzw. Einheiten aufweisen:
- wenigstens eine Übertragungseinheit zum Aussenden und/oder Übertragen und/oder Empfangen von Informationen, insbesondere des wenigstens einen durch die Erkennungseinheit bestimmten Antriebsparameters.

Insbesondere ist innerhalb oder außerhalb des Türsystems, bspw. bei einem Bereitstellungssystem, eine Kommunikationseinheit vorgesehen, welche bspw. zum (ggf. kabellosen) Empfangen und/oder Aussenden des wenigstens einen (durch die Übertragungseinheit) ausgesendeten bzw. empfangenen Antriebsparameters ausgeführt ist (bspw. durch eine Kommunikationsschnittstelle der Kommunikationseinheit).

Vorzugsweise ist die Kommunikationseinheit zum (bspw. kabellosen) Übertragen des wenigstens einen, insbesondere von der Übertragungseinheit ausgesendeten und/oder durch die Kommunikationseinheit empfangenen, Antriebsparameters an ein türsystemfernes Speichersystem, vorzugsweise, zumindest teilweise über Funk, ausgeführt, sodass der (auf diese Weise) übertragene Antriebsparameter türsystemfern bereitstellbar ist. Dies hat den Vorteil, dass technisch einfach und kostengünstig eine Bereitstellung des Antriebsparameters außerhalb des Türsystems erfolgen kann. Des Weiteren kann der Vorteil erzielt werden, dass die Übertragungseinheit technisch einfacher ausgestaltet werden kann als die Kommunikationseinheit, sodass für die Nutzung neuer Kommunikationstechnologien nur die Kommunikationseinheit angepasst werden muss.

Insbesondere wird dabei unter "kabellos" (auch: drahtlos) verstanden, dass zumindest teilweise eine Funk- (Kommunikations- bzw. Übertragungs-) Technologie zum Einsatz kommt, d. h. bspw. eine Übertragung und/oder ein Aussenden und/oder ein Empfangen zumindest teilweise über Funk durchgeführt wird. Mit anderen Worten kann bei einer kabellosen Übertragung (von Daten) wenigstens ein Teil der verwendeten Übertragungstechnologien als Funktechnologie ausgeführt sein, auch wenn bspw. mehrere Übertragungstechnologien zum Einsatz kommen (bspw. bei der Übertragung von der Kommunikationseinheit über WLAN zum Access-Point und dann bspw. kabelgebunden zum Speichersystem). Insbesondere bezieht sich eine kabellose Ausgestaltung lediglich auf wenigstens einen Teil eines Übertragungsweges, bspw. den (Luft-) Übertragungsweg, über den Funkwellen, d. h. elektromagnetische Wellen und insbesondere modulierte elektromagnetische Wellen, übertragen werden. Die Funk-Technologie bzw. zumindest eine der verwendeten Technologien zur Übertragung kann dabei bspw. als Bluetooth, insbesondere Bluetooth-Low Energy, oder als Nahfeldkommunikation (NFC) oder als Wireless Local Area Network (WLAN) oder dergleichen ausgeführt sein. Auch kann ggf. die Funk-Technologie mehrere unterschiedliche Funk-Technologien umfassen, welche bspw. parallel oder seriell eingesetzt werden.

Dabei kann es möglich sein, dass eine Kommunikationsschnittstelle der Kommunikationseinheit zum (ggf. kabellosen) Empfangen und/oder Aussenden von Informationen, wie dem wenigstens einen Antriebsparameter, von der bzw. an die Übertragungseinheit vorgesehen ist. Die Kommunikationsschnittstelle ist dabei bspw. als Funkkommunikationsschnittstelle, insbesondere als Bluetooth-Kommunikationsschnittstelle und/oder WLAN-Kommunikationsschnittstelle und/oder Bluetooth Low Energy (BLE) Kommunikationsschnittstelle und/oder als Mobilfunkkommunikationsschnittstelle, ausgeführt.

Vorzugsweise ist die Kommunikationsschnittstelle der Kommunikationseinheit zur zumindest teilweisen Bereitstellung und/oder Durchführung wenigstens einer der nachfolgenden Kommunikationstechnologien ausgeführt:
- Bluetooth, insbesondere BLE,
- WLAN (Wireless Local Area Network),
- Mobilfunk, insbesondere UMTS (Universal Mobile Telecommunications System) oder LTE (Long Term Evolution) oder dergleichen,
- Ethernet,
- NFC (Near Field Communication).

Dabei kann die Kommunikationsschnittstelle zur (ggf. kabellosen) Kommunikation über die entsprechende Kommunikationstechnologie, insbesondere zur (Daten-) Verbindung, mit der Übertragungseinheit, insbesondere einem Schnittstellenelement der Übertragungseinheit, geeignet sein. Entsprechend kann die Übertragungseinheit, insbesondere das Schnittstellenelement, ebenfalls zur zumindest teilweisen Bereitstellung und/oder Durchführung der Kommunikationstechnologie der Kommunikationsschnittstelle ausgeführt sein. Dies ermöglicht eine einfache und sichere Übertragung der Informationen. Die Durchführung der Kommunikationstechnologie bzw. die zumindest teilweise Bereitstellung umfasst dabei auch den Fall, dass ggf. noch weitere Komponenten außerhalb des Schnittstellenelements bzw. der Kommunikationsschnittstelle (wie eine Energiequelle, eine Antenne oder dergleichen) zur vollständigen Bereitstellung notwendig sind.

Vorzugsweise kann die Türkomponente in wenigstens einen Bewegungszustand gebracht werden, um bspw. eine Bewegung von einem ersten Zustand in einen zweiten Zustand durchzuführen (oder umgekehrt). Der erste Zustand kann bspw. ein offener Zustand und der zweite Zustand kann bspw. ein geschlossener Zustand der Türkomponente sein. Somit ist ein erster Bewegungsvorgang bspw. ein Öffnen der Türkomponente und ein zweiter Bewegungsvorgang bspw. ein Schließen der Türkomponente.

Bspw. dient dabei der geschlossene Zustand dazu, einen Durchgang (insbesondere für Personen) zu verschließen, und/oder es dient der geöffnete Zustand dazu, einen Durchgang (für Personen insbesondere zum Durchgehen) freizugeben. Somit kann die Türkomponente bevorzugt als bewegbares Türblatt einer Personentür ausgeführt sein. Das Türsystem ist insbesondere als ein Automatiktürsystem und/oder Personentürsystem ausgeführt. Dies ermöglicht die Bereitstellung einer Vielzahl von Türfunktionen, welche zumindest teilweise automatisch in Abhängigkeit von einer Konfiguration durchgeführt werden können.

Erfindungsgemäß steht die Türkomponente in (bspw. mechanischer) Wirkverbindung mit der Antriebseinheit, sodass die Antriebseinheit die Überführung in den Bewegungszustand (d. h. die Bewegung bzw. den Bewegungsvorgang) der Türkomponente bewirken kann. Hierzu umfasst die Antriebseinheit bspw. wenigstens einen (Elektro-) Motor oder dergleichen. Auch ist es denkbar, dass wenigstens ein weiterer Motor der Antriebseinheit vorgesehen ist, oder ggf. wenigstens eine weitere Antriebseinheit, um bspw. ein Schloss und/oder eine Verriegelung der Türkomponente anzusteuern. Auch kann ggf. durch die Kontrolleinheit wenigstens eine weitere Komponente des Türsystems zur Durchführung einer Türfunktion angesteuert werden, bspw. ein Elektromagnet oder eine Kamera oder eine Beleuchtung oder dergleichen. Dies ermöglicht eine umfangreiche Automatisierung bei dem Türsystem.

Das Türsystem, insbesondere die Türkomponente, kann bspw. wenigstens eine der nachfolgenden Türbauformen aufweisen bzw. gemäß dieser Türbauformen ausgeführt sein:
- Anschlagtür (Schwenktür), wobei vorzugsweise die Türkomponente schwenkbar ausgeführt ist,
- Schiebetür, wobei vorzugsweise die Türkomponente verschiebbar ausgeführt ist,
- Schwenkschiebetür, wobei vorzugsweise die Türkomponente sowohl verschiebbar als auch schwenkbar ausgeführt ist,
- Falttür,
- (Karussell-) Drehtür, wobei die Türkomponente drehbar ausgeführt ist und/oder fest mit einem drehbar gelagerten Verbindungselement verbunden ist.

Vorzugsweise kann die Türkomponente (bzw. wenigstens eine der Türkomponenten des Türsystems / der Türsysteme) auch als eine Personentür und/oder Brandschutztür und/oder Außentür und/oder Innentür und/oder Haustür und/oder Rauchschutztür und/oder einbruchhemmende Tür und/oder Sicherheitstür und/oder Zimmertür (jeweils bspw. eines Gebäudes bzw. eines Hauses) ausgebildet sein.

Des Weiteren kann unter einer Türkomponente im weiteren Sinne auch ein Tor verstanden werden, wobei die Türkomponente im engeren Sinne nicht als Tor ausgebildet ist. Gleiches gilt für das Türsystem, welches im weiteren Sinne ein Tor aufweisen kann, im engeren Sinne jedoch nicht, also in anderen Worten torlos ausgestaltet ist.

Insbesondere können im Türsystem und/oder in einem Objekt auch mehrere Türkomponenten gleicher oder unterschiedlicher Bauformen vorgesehen sein, um somit umfangreiche Automatisierungsmöglichkeiten bereitzustellen. Bspw. können anhand der Konfiguration und/oder anhand der Antriebsparameter und/oder anhand der Kontrolleinheit die Türkomponenten in Abhängigkeit voneinander kontrolliert, insbesondere bewegt und/oder gesperrt, werden. Somit können vorteilhafterweise komplexe Türfunktionen, wie eine Schleusenfunktion, bereitgestellt werden.

Es ist weiter denkbar, dass die Erkennungseinheit wenigstens eine Elektronikkomponente und/oder wenigstens eine der nachfolgenden Komponenten aufweist, welche jeweils als Elektronikkomponente ausgeführt sein können:
- wenigstens eine Speicherkomponente, bspw. ein nicht-flüchtiger Datenspeicher,
- wenigstens eine Sensorkomponente, bspw. ein elektronischer Sensor,
- wenigstens eine Empfangskomponente, bspw. eine Antenne oder ein Funkempfänger,
- wenigstens eine Zählerkomponente zur Zählung eines Nutzungszyklus der Türkomponente,
- wenigstens eine Verarbeitungskomponente, bspw. ein integrierter Schaltkreis oder ein Mikroprozessor oder Mikrocontroller oder dergleichen,
- wenigstens eine Ortungskomponente, bspw. ein GPS-Sensor (Global Positioning System Sensor).

Somit ist es möglich, dass die Erkennungseinheit dazu ausgeführt ist, eine Erkennung des wenigstens einen Antriebsparameters durchzuführen, d. h. insbesondere den wenigstens einen Antriebsparameter zu bestimmen, vorzugsweise zu erfassen und/oder zu erheben und/oder zu messen.

Bspw. kann dabei die Sensorkomponente dazu eingesetzt werden, eine Messung und/oder Erfassung bei der Antriebseinheit und/oder der Türkomponente durchzuführen. Hierzu ist die Sensorkomponente bevorzugt im Bereich der Antriebseinheit und/oder Türkomponente angeordnet und/oder auf diese ausgerichtet. Bspw. kann durch die Sensorkomponente eine Drehzahl einer Antriebs- und/oder Abtriebswelle der Antriebseinheit gemessen werden, und/oder eine Zeitdauer der Bewegung der Türkomponente von einem ersten Zustand in einen zweiten Zustand (d. h. eines Bewegungsvorgangs) gemessen werden. Auch kann es möglich sein, dass anhand der Erfassung der Sensorkomponente ein Nutzungszyklus des Türsystems bestimmt wird. Der Nutzungszyklus ist dabei bspw. abhängig von jedem einzelnen Bewegungsvorgang von dem ersten in den zweiten Zustand (bspw. das Öffnen und Schließen der Türkomponente) oder von einer Kombination der Bewegungsvorgänge (bspw. wird das Öffnen und anschließende Schließen gezählt). Damit kann der Vorteil erzielt werden, dass eine Beanspruchung und ggf. ein Wartungszustand des Türsystems ermittelt werden kann.

Des Weiteren kann es möglich sein, dass durch die Erkennungseinheit, insbesondere durch wenigstens eine Sensorkomponente der Erkennungseinheit, eine Strom- und/oder Spannungsmessung am Türsystem, insbesondere bei der Antriebseinheit, erfolgt, sodass der Antriebsparameter anhand der Strom- und/oder Spannungsmessung bestimmt wird. Bspw. erfolgt dabei ein Vergleich eines Messwertes der Messung mit wenigstens einem Grenzwert, sodass vorzugsweise der Antriebsparameter Informationen über eine Überschreitung des Grenzwertes durch den Messwert umfasst. Bspw. weist die Messung auf einen kritischen Betriebszustand oder Beanspruchungszustand des Türsystems hin, sodass dieser frühzeitig erkannt werden kann, insbesondere anhand des Antriebsparameters. Der Antriebsparameter kann hierzu für ein Ergebnis dieser Messung spezifisch sein.

Optional sind die Sensorkomponente und/oder die Verarbeitungskomponente und/oder die Empfangskomponente der Erkennungseinheit jeweils als elektronische Komponenten ausgeführt, welche bspw. auf einer Platine angeordnet und/oder über Leiterbahnen elektrisch zumindest teilweise miteinander verbunden sind. Die Verarbeitungskomponente ist bspw. als ein integrierter Schaltkreis, bspw. als Mikrocontroller, ausgeführt, um insbesondere eine Verarbeitung und/oder Bestimmung des Antriebsparameters schnell und effizient durchzuführen.

Es kann möglich sein, dass die wenigstens eine Sensorkomponente gemäß wenigstens einer der nachfolgenden Sensortypen ausgeführt ist:
- Resistiver Sensor, bspw. mit einem temperaturabhängigen (elektrischen) Widerstand zur Temperaturmessung,
- Optischer Sensor, bspw. mit wenigstens einer Photodiode und/oder wenigstens einem Kamerasensor (z. B. CCD-Sensor),
- Akustischer Sensor, bspw. als Mikrophon,
- Magnetischer Sensor, bspw. als Hall-Sensor,
- Induktiver Sensor,
- Kapazitiver Sensor,
- Thermoelektrischer Sensor.

Dies ermöglicht vorteilhafterweise die Bestimmung von Antriebsparameter anhand der Erfassungsergebnisse der Sensorkomponente(n), welche ggf. ausgewertet, insbesondere miteinander verglichen, werden können, um anhand der Antriebsparameter auf komplexe Zusammenhänge zu schließen. Diese Auswertung kann bspw. durch das Speichersystem oder anhand des Speichersystems durch eine Datenverarbeitungsanlage erfolgen.

Weiter kann es möglich sein, dass die Erkennungseinheit wenigstens eine Empfangskomponente aufweist, die bspw. wenigstens eine der nachfolgenden Elemente umfasst:
- wenigstens eine Antennenkomponente,
- wenigstens eine (De-) Modulationskomponente, insbesondere zur Kommunikation bzw. zum Demodulieren von (mit der Antennenkomponente) empfangenen Signalen bzw. Nachrichten,
- wenigstens ein Verstärkerelement zum Verstärken von empfangenen Signalen.

Die Empfangskomponente kann z. B. eine Internet-Schnittstelle und/oder eine Funkschnittstelle, insbesondere Bluetooth- und/oder Mobilfunkschnittstelle, und/oder einen (Geradeaus-) Empfänger für den Empfang eines Zeitzeichensignals (bspw. DCF77) umfassen. Des Weiteren ist es denkbar, dass ein durch die Empfangskomponente empfangenes und/oder von der Erkennungseinheit verarbeitetes Signal wenigstens ein Internetsignal (bspw. Datenpakete) und/oder wenigstens ein Zeitsignal und/oder wenigstens ein Funksignal (Bluetooth - und/oder Mobilfunckommunikationssignal) umfasst. So kann vorzugsweise anhand des verarbeiteten Signals der Antriebsparameter bestimmt werden. Dabei ist es auch möglich, dass die Erkennungseinheit, insbesondere die Empfangskomponente, unterschiedliche Signale und/oder Nachrichten empfängt und/oder verarbeitet, insbesondere auch unterschiedlichen Typs (z. B. Zeitsignale und Internetsignale). Diese unterschiedlichen Signale / Nachrichten können dann bspw. zur Bestimmung eines einzelnen oder unterschiedlicher Antriebsparameter herangezogen werden. Optional kann daher auch eine Verknüpfung und/oder ein Vergleich der Signale / Nachrichten durchgeführt werden, um Antriebsparameter mit hoher Relevanz für einen Betrieb des Türsystems zu bestimmen.

Es kann vorteilhafterweise möglich sein, dass die Erkennungseinheit anhand eines Ortungssignals einer Ortungskomponente und/oder eines Netzwerks- oder Internetsignals (d. h. bspw. über eine Internetkommunikation) den Antriebsparameter bestimmt, bspw. als Wetterinformation wie Temperatur und/oder Wind und/oder (geographische) Standortinformation und/oder Zeitinformation und/oder dergleichen. Auch kann optional diese Information, insbesondere die Wetterinformation, noch mit einer weiteren Information (z. B. einer geographischen Ortungsinformation der Ortungskomponente) verglichen werden. So kann bspw. durch Ermittlung der Standortinformation das Türsystem geortet werden, d. h. der Standort der Erkennungseinheit bestimmt werden. Diese Information kann bspw. dazu genutzt werden, in Abhängigkeit von dem Standort und/oder dem Wetter und/oder der Zeit wenigstens einen Antriebsparameter zu bestimmen und so vorteilhafterweise die Antriebseinheit in Abhängigkeit von diesem Antriebsparameter zu betreiben und/oder zu programmieren. Dies ermöglicht es bspw., die Türkomponente zu bestimmten Tageszeiten oder Wochentagen (dauerhaft) geschlossen bzw. versperrt zu halten. Z. B. kann an anderen Wochentagen oder zu anderen Tageszeiten die Türkomponente dagegen (dauerhaft) offen gehalten werden.

Des Weiteren ist es denkbar, dass die Erkennungseinheit den Antriebsparameter aus einer Speicherkomponente bestimmt, bspw. als Seriennummer oder Kennzeichen (Kennung), welche für das Türsystem spezifisch und/oder diesem eindeutig zugeordnet ist. Dies ermöglicht eine eindeutige Identifikation des Türsystems anhand des entsprechenden Antriebsparameters. Hierzu kann bspw. (nach einer erfolgreichen Übertragung) auch ein Vergleich des Antriebsparameters mit weiteren (vorbestimmten) Daten in einem türsystemfernen Speichersystem erfolgen. Auch ist es denkbar, dass die Kennung bzw. die Daten in der Speicherkomponente zumindest teilweise kryptografisch gesichert sind, um so eine Manipulation der Daten zu verhindern.

Es ist weiter auch denkbar, dass die Erkennungseinheit zur Ermittlung des Internetsignals und/oder weiterer Informationen zur Bestimmung des Antriebsparameters eine Kommunikation mit der Kommunikationseinheit durchführt. Diese Kommunikation ist bspw. eine Kommunikation über die Übertragungseinheit, bspw. als Funk, insbesondere Bluetooth-Kommunikation, oder über eine zusätzliche Kommunikationseinheit (bspw. auch türsystemseitig). Damit ist es möglich, dass Informationen der Kommunikationseinheit, bspw. auch Internetinformationen oder dergleichen, durch die Erkennungseinheit zur Bestimmung des Antriebsparameters genutzt werden können.

Weiter kann es vorgesehen sein, dass die Übertragungseinheit (des Türsystems) zur (ggf. kabellosen) Kommunikation mit der Kommunikationseinheit und/oder mit wenigstens einer weiteren Kommunikationseinheit und/oder Kommunikationsvorrichtung und/oder mit weiteren Übertragungseinheiten (anderer Türsysteme) ausgeführt ist. Insbesondere ist diese Kommunikation als eine uni- oder bidirektionale Kommunikation ausgeführt. So kann es bspw. möglich sein, dass die Übertragungseinheit (nur oder zumindest teilweise) dafür vorgesehen ist, den (wenigstens einen und ggf. durch die Erkennungseinheit) bestimmten Antriebsparameter an die Kommunikationseinheit zu übertragen. Alternativ oder zusätzlich kann es auch möglich sein, dass die Übertragungseinheit wenigstens eine Information, vorzugsweise eine Antriebsinformation, von der Kommunikationseinheit empfängt. Bspw. können auf diese Weise Antriebsinformationen, insbesondere auch Antriebsparameter oder sonstige für den Antrieb der Türkomponente relevante Informationen, von der Kommunikationseinheit an die Übertragungseinheit übertragen werden, und vorzugsweise anschließend anhand der übertragenen Antriebsinformationen die Antriebseinheit betrieben werden. Bspw. dienen diese Antriebsinformationen auch zur Programmierung der Antriebseinheit oder dergleichen. Damit kann der Betrieb des Türsystems deutlich vereinfacht werden.

Es kann möglich sein, dass die Übertragungseinheit als Funkschnittstellengerät, bevorzugt als Mobilfunk- oder Bluetooth-Schnittstellengerät, besonders bevorzugt als Bluetooth Low Energy (BLE) Schnittstellengerät, ausgeführt ist. In anderen Worten kann es möglich sein, dass die Übertragungseinheit ein (erstes) Schnittstellenelement aufweist, welches zur Durchführung einer Funkkommunikation, insbesondere Mobilfunk oder Bluetooth, vorzugsweise BLE, ausgeführt ist, bevorzugt zum Aussenden und/oder Empfangen des wenigstens einen Antriebsparameters. Weiter kann es möglich sein, dass die Übertragungseinheit fest in dem Türsystem integriert ist und/oder zur Kommunikation mit einer weiteren Übertragungseinheit mindestens eines weiteren Türsystems, insbesondere im selben Objekt oder in einem weiteren Objekt, ausgeführt ist, sodass eine Vernetzung der Türsysteme möglich ist. Für diese Vernetzung kann die Übertragungseinheit bspw. ebenfalls das (erste) Schnittstellenelement oder ein weiteres (zweites) Schnittstellenelement, z. B. für eine andere Kommunikationstechnologie, ggf. eine Netzwerkkommunikation (bspw. Mobilfunkkommunikation), nutzen. Somit können flexibel Kommunikationsmöglichkeiten geschaffen werden.

Es kann möglich sein, dass die Übertragungseinheit die Erkennungseinheit und/oder eine weitere Erkennungseinheit aufweist, um den (oder wenigstens einen weiteren) Antriebsparameter zu bestimmen. Alternativ oder zusätzlich können auch Verbindungsinformationen über eine Übertragung (Aussenden/Empfangen) der Übertragungseinheit als Antriebsparameter genutzt werden. Bspw. kann dieser Antriebsparameter zum Speichersystem übertragen werden.

Bspw. kann ein erstes Türsystem eine erste Übertragungseinheit aufweisen, und darüber ggf. direkt bzw. unmittelbar mit der Kommunikationseinheit (ggf. kabellos) kommunizieren (bspw. zur Übertragung des Antriebsparameters des ersten Türsystems). Ein zweites Türsystem kann bspw. eine zweite Übertragungseinheit aufweisen, um über die zweite Übertragungseinheit mit der ersten Übertragungseinheit des ersten Türsystems zu kommunizieren, insbesondere zur Übertragung von Antriebsparametern des zweiten Türsystems. Auch kann es möglich sein, dass weitere Türsysteme mit weiteren Übertragungseinheiten vorgesehen sind, um mit der ersten Übertragungseinheit des ersten Türsystems zu kommunizieren, insbesondere um jeweilige Antriebsparameter an die Kommunikationseinheit zu übertragen. Somit kann eine umfangreiche und flexibel installierbare Infrastruktur zur Vernetzung verschiedener Türsysteme (mit jeweiligen Türkomponenten) erfolgen. Die Übertragungseinheiten können dabei bspw. identisch ausgebildet sein und/oder jeweils ein zweites Schnittstellenelement zur Kommunikation untereinander aufweisen und/oder es kann möglich sein, dass nur die erste Übertragungseinheit das (erste) Schnittstellenelement zur Kommunikation mit der Kommunikationseinheit aufweist.

Als eine weitere Möglichkeit zur Vernetzung der Türsysteme ist es denkbar, dass mindestens zwei oder drei oder vier oder mehr Türsysteme vorgesehen sind, welche jeweils eine Übertragungseinheit aufweisen. Dabei kann es möglich sein, dass eine oder mehrere der Türsysteme (direkt) mit der Kommunikationseinheit (ggf. kabellos) kommunizieren bzw. kommunizieren können (d. h. Informationen an die Kommunikationseinheit aussenden, empfangen und/oder übertragen können, bspw. Antriebsparameter).

Weiter kann es möglich sein, dass eine (ggf. kabellose) Übertragung von Informationen, wie Antriebsparametern, zwischen verschiedenen Übertragungseinheiten wenigstens zwei oder mehr der Türsysteme durchführbar ist, d. h. die Türsysteme über die Übertragungseinheiten vernetzt sind. Auf diese Weise kann die Kommunikation wenigstens einer der Übertragungseinheiten wenigstens einer der Türsysteme mit der Kommunikationseinheit auch von anderen Türsystemen genutzt werden, um insbesondere jeweilige bestimmte Antriebsparameter zu übertragen. Auch kann es möglich sein, dass über die Kommunikation wenigstens eines der Türsysteme mit der Kommunikationseinheit auch die anderen Türsysteme durch die Kommunikationseinheit kontrollierbar (bspw. ansteuerbar und/oder konfigurierbar) sind, und somit insbesondere eine bidirektionale Kommunikation erfolgt. Z. B. kann es möglich sein, dass wenn sich die Kommunikationseinheit in der Nähe eines der Übertragungseinheiten der Türsysteme befindet, eine Kommunikation der Kommunikationseinheit über diese Übertragungseinheit mit sämtlichen der vernetzten Türsysteme möglich ist.

Weiter ist es ebenfalls denkbar, dass das Türsystem (oder bei mehreren Türsystemen zumindest eines der Türsysteme) zusätzlich oder anstatt der Übertragungseinheit die Kommunikationseinheit aufweist. Bspw. können sich dann Übertragungseinheiten der übrigen Türsysteme mit der Kommunikationseinheit verbinden, um bspw. Antriebsparameter an das Speichersystem (ggf. kabellos) zu übertragen. Vorzugsweise kann die Kommunikationseinheit dabei im Türsystem, insbesondere originär, integriert sein, oder nachträglich nachgerüstet sein. Dies hat den Vorteil, dass ggf. nur eines der Türsysteme mit dem Schnittstellenelement der Übertragungseinheit ausgestattet werden muss, und dennoch sämtliche Türsysteme Antriebsparameter an das Speichersystem übertragen können, sodass die Kosten und die Komplexität des Gesamtsystems reduzierbar sind.

Vorzugsweise kann die Kommunikationseinheit im Türsystem (bzw. in wenigstens einem der Türsysteme) integriert sein oder separat vom Türsystem, bspw. tragbar, ausgeführt sein. Bevorzugt unterscheidet sich die (ggf. im Türsystem integrierte oder tragbar ausgeführte) Kommunikationseinheit von der Übertragungseinheit (oder den Übertragungseinheiten) des Türsystems dadurch, dass die Kommunikationseinheit wenigstens eine (bezogen auf die Kommunikationstechnologie) andersartige Übertragungsschnittstelle, insbesondere Funkübertragungsschnittstelle, im Vergleich zur Übertragungseinheit aufweist.

Bspw. umfasst die Kommunikationseinheit eine Funkübertragungsschnittstelle, welche z. B. als eine Mobilfunkschnittstelle oder WLAN-Schnittstelle ausgeführt sein kann, um eine Datenverbindung zu einem Netzwerk herzustellen. Insbesondere kann die Übertragungseinheit nicht geeignet sein, diese Kommunikationstechnologie der Kommunikationseinheit, wie eine Mobilfunkkommunikation und/oder WLAN-Kommunikation, durchzuführen. Damit kann der Herstellungsaufwand des Türsystems und/oder der Übertragungseinheit reduziert werden, da ein oder mehrere Türsysteme die Datenverbindung der Kommunikationseinheit nutzen können.

Auch ist es denkbar, dass die Übertragungseinheit (und/oder Kommunikationseinheit und/oder Kommunikationsvorrichtung) nachrüstbar ausgeführt ist, insbesondere als Nachrüstmittel, vorzugsweise als Adapter-Stick, insbesondere Bluetooth-Stick oder dergleichen. Dabei ist es denkbar, dass dieses Nachrüstmittel (bspw. als Bluetooth-Stick) nachträglich, d. h. erst nach erster vollständiger Montage des Türsystems, mit dem Türsystem (elektrisch und/oder elektronisch und/oder mechanisch fest, insbesondere über einen Anschluss bzw. ein Anschlussschnittstellenelement) verbunden werden kann. Vorzugsweise stellt dabei die Übertragungseinheit, insbesondere durch ein Schnittstellenelement, eine erste Kommunikationstechnologie für das Türsystem bereit, bspw. eine Funkkommunikation, bevorzugt Bluetooth oder BLE, um mit der Kommunikationseinheit zu kommunizieren und/oder den Antriebsparameter auszusenden. Dies ermöglicht es, bestehende Türsysteme mit der entsprechenden Kommunikationsfähigkeit der ersten Kommunikationstechnologie auch nachträglich und kostengünstig auszustatten, und das Türsystem somit in einfacher Weise kommunikationsfähig zu machen. Weiter kann durch die Kommunikation mit der Kommunikationseinheit bzw. durch die Übertragung des Antriebsparameters durch die Kommunikationseinheit auch eine zweite Kommunikationstechnologie der Kommunikationseinheit genutzt werden, bspw. eine WLAN- oder Mobilfunkkommunikation, welche sich insbesondere von der ersten Kommunikationstechnologie unterscheidet. Insbesondere stellt das Türsystem originär und/oder außerhalb der Übertragungseinheit weder die erste noch die zweite Kommunikationstechnologie bereit. Damit kann durch die Nutzung der Übertragungseinheit in einfacher und kostengünstiger Weise das Türsystem um wenigstens die erste (direkt) und ggf. indirekt die zweite Kommunikationstechnologie erweitert werden. Mit anderen Worten kann die Übertragungseinheit auch als Adapter für das Türsystem zur Kommunikation mit der Kommunikationseinheit genutzt werden.

Bevorzugt kann es möglich sein, dass eine Kommunikationsreichweite der Übertragungseinheit, insbesondere einer Funkschnittstelle der Übertragungseinheit, maximal 50 m oder maximal 20 m oder maximal 10 m oder maximal 5 m beträgt. Dies ermöglicht es, eine energiesparende Kommunikation (bspw. über BLE) und/oder eine erhöhte Sicherheit zu gewährleisten.

Optional kann es auch möglich sein, dass die Übertragungseinheit originär im Türsystem integriert und damit nicht nachrüstbar ausgeführt ist. Bspw. kann die Übertragungseinheit fest und/oder unlösbar mit dem Türsystem, bspw. mit einer Platine und/oder weiteren Elektronikkomponenten des Türsystems, verbunden sein. Damit kann ein Türsystem mit einem hohen Funktionsumfang für die Übertragung von Antriebsparametern bereitgestellt werden.

Es ist ferner denkbar, dass ein Nachrüstmittel, bevorzugt die Übertragungseinheit, besonders bevorzugt als ein Adapter- und/oder Bluetooth-Stick, zur Funktionserweiterung mit dem Türsystem (nachträglich und/oder lösbar) verbunden ist bzw. wird. Auf diese Weise können auch bereits montierte oder ältere Türsysteme mit einer Übertragungseinheit ausgestattet werden. Bspw. kann das Nachrüstmittel zur Bereitstellung eines Kommunikationsverfahrens oder Übertragungsverfahrens dienen, z. B. zur Übertragung von (Antriebs-) Informationen, wie wenigstens einem Antriebsparameter, über Bluetooth. Dabei ist es auch denkbar, dass diese übertragenen (Antriebs-) Informationen dazu dienen, eine Kontrolle (d. h. bspw. Steuerung und/oder Regelung und/oder Konfiguration, wie eine Programmierung) des Türsystems, insbesondere der Antriebseinheit, durchzuführen. Optional kann für eine solche Kontrolle (originär, d. h. bereits seit der ersten Montage) zudem eine (ggf. elektro-) mechanische Schaltvorrichtung, insbesondere ein Schlüsselschalter oder dergleichen, vorgesehen sein.

Es ist denkbar, dass das Türsystem eine (mechanische) Schaltvorrichtung zur (manuellen) Kontrolle und/oder Bedienung des Türsystems aufweist, insbesondere zur Bedienung durch einen Benutzer, vorzugsweise durch einen Einsatz eines mechanischen Schlüssels. Es kann möglich sein, dass beim Verbinden eines Nachrüstmittels, insbesondere der Übertragungseinheit, mit dem Türsystem die Schaltvorrichtung des Türsystems außer Betrieb genommen wird (deaktiviert wird), um eine (manuelle) Kontrolle über die Schaltvorrichtung zu verhindern. Dies hat den Vorteil, dass dann ausschließlich über das Nachrüstmittel bzw. über die dadurch übertragenen Informationen die Kontrolle erfolgen kann. Optional kann dennoch eine manuelle Kontrolle vorgesehen sein, bspw. durch ein Übertragen von Informationen von einer Kommunikationseinheit zur Übertragungseinheit, wobei ggf. die Informationen durch einen Bediener der Kommunikationseinheit bestimmt und/oder beeinflusst werden (bspw. über eine Smartphone-App). Die übertragenen Informationen, insbesondere Antriebsinformationen, dienen dann bspw. zur Kontrolle der Antriebseinheit und/oder zur Konfiguration (bspw. Programmierung) des Türsystems.

So kann es bspw. vorgesehen sein, dass ein zumindest teilweise automatischer und/oder manueller Betrieb, insbesondere eine Konfiguration und/oder Kontrolle, des Türsystems, insbesondere der Antriebseinheit und/oder einer Türfunktion und/oder der Türkomponente, anhand von Antriebsinformationen durchgeführt wird. Die Antriebsinformationen umfassen dabei bspw. durch einen Bediener bestimmte Informationen und/oder wenigstens einen Antriebsparameter und/oder anhand von wenigstens einem Antriebsparameter bestimmte Informationen (z. B. Konfigurationen, welche anhand der Antriebsparameter des Speichersystems generiert wurden). Bspw. werden die Antriebsinformationen von der Kommunikationseinheit an die Übertragungseinheit übertragen und/oder von der Übertragungseinheit bestimmt und/oder von der Kontrolleinheit bestimmt.

Es kann bspw. möglich sein, dass ein Bediener die Kommunikationseinheit über ein Computerprogramm, insbesondere eine App, z. B. Smartphone-App oder Computer-App oder dergleichen, nutzt. Das Computerprogramm wird dabei bspw. auf der Kommunikationseinheit ausgeführt, um damit Einfluss auf den Betrieb des Türsystems zu nehmen und/oder Antriebsparameter auszuwerten. Dies ermöglicht eine besonders komfortable Bedienung und/oder Konfiguration des Türsystems. In Abhängigkeit von wenigstens einer Bedienereingabe und/oder von wenigstens einem der Antriebsparameter kann dann bspw. eine Antriebsinformation bestimmt und/oder an das Türsystem, insbesondere die Übertragungseinheit, (ggf. kabellos) übertragen werden. Ggf. erfolgt dann eine Weiterübermittlung der Antriebsinformation von der Übertragungseinheit an die Kontrolleinheit des Türsystems. Die Antriebsinformation wird dann bspw. durch die Übertragungseinheit und/oder durch die Kontrolleinheit ausgewertet und ggf. in Abhängigkeit von dieser Auswertung die Antriebseinheit angesteuert. Bspw. kann bei Übertragung und/oder Auswertung einer ersten Antriebsinformation die Türkomponente geöffnet und bei Übertragung und/oder Auswertung einer zweiten Antriebsinformation, welche sich von der ersten Antriebsinformation unterscheidet, die Türkomponente geschlossen werden. Auch kann bspw. anhand der Antriebsinformationen eine Konfiguration oder Programmierung des Türsystems bestimmt werden. Dies ermöglicht einen einfachen Betrieb des Türsystems.

Eine Konfiguration, insbesondere eine Programmierung, für das Türsystem umfasst dabei bspw. Informationen und/oder Parameter für ein Betriebsverhalten des Türsystems, bspw. ob und/oder wann und/oder in welchem Modus bestimmte Türfunktionen ausgeführt werden, bevorzugt ob und zu welchen Zeitpunkten wenigstens ein bestimmter Bewegungsvorgang der Türkomponente durchgeführt werden soll (bspw. eine Öffnung zu einer ersten Tages- oder Wochenzeit oder ein Schließen zu einer zweiten Tages- oder Wochenzeit). Vorteilhafterweise kann die Konfiguration auch Informationen umfassen, zu welchen Zeitpunkten und/oder über welche Dauer die Türkomponente (vollständig) geschlossen oder geöffnet sein soll. Weiter ist es auch denkbar, ggf. als eine weitere Türfunktion, dass über die Konfiguration ein Bewegungsverhalten, bspw. ein Schließen oder Öffnen, parametrisiert werden kann (bspw. die Öffnungs- oder Schließgeschwindigkeit oder die Öffnungs- oder Schließbeschleunigung oder dergleichen). Auch sind weitere Programmierungen denkbar, um (bspw. zeit- oder ereignisgesteuert) bestimmte Türfunktionen aktivieren zu können und/oder eine Authentifizierungsvorgabe für eine Türfunktion festzulegen. Bspw. kann dann nur in Abhängigkeit von einer erfolgreichen Authentifizierung wenigstens eine bestimmte Türfunktion ausgeführt werden.

Weiter kann ggf. auch ein Modus durch die Konfiguration bestimmt werden. Der Modus kann dabei bspw. ein zeitgesteuerter oder ein ereignisgesteuerte oder ein manueller oder ein ferngesteuerter Modus sein. Bei dem ferngesteuerten Modus ist es denkbar, dass durch eine Übertragung von Informationen an die Übertragungseinheit, bspw. über das Internet und/oder die Kommunikationseinheit, Antriebsinformationen übertragen werden und so insbesondere die Kontrolle des Türsystems anhand der übertragenen Antriebsinformationen erfolgt. Bei dem manuellen Modus können bspw. an der Kommunikationseinheit von einem Benutzer festgelegte und von der Kommunikationseinheit übertragene Antriebsinformationen für die Kontrolle genutzt werden. Auch eine Kombination verschiedener Modi kann ggf. konfiguriert werden. Dies ermöglicht einen flexiblen und anpassungsfähigen Betrieb des Türsystems.

Die Türfunktionen umfassen bspw. bestimmte Bewegungsvorgänge, welche in einer bestimmten Art und Weise und/oder in Abhängigkeit von Vorgaben durchgeführt werden (wie bei einer Authentifizierung in Abhängigkeit von einer Authentifizierungsvorgabe, wie einem Passwort oder dergleichen). Des Weiteren kann es möglich sein, dass Konfigurationen und/oder Türfunktionen vorgesehen sind, welche die Beibehaltung eines Zustands der Türkomponente bewirken (bspw. die Beibehaltung des geöffneten oder geschlossenen Zustands). Insbesondere kann es dabei sinnvoll sein, die Türfunktionen in Abhängigkeit der Antriebsparameter durchzuführen (bspw. die Türkomponente zu bestimmten Zeiten vollständig geschlossenen zu halten). Dies hat den Vorteil, dass das Türsystem flexibel und umfassend konfigurierbar ausgeführt sein kann.

Es kann möglich sein, dass bestimmte Konfigurationen und/oder Türfunktionen eine vollständige Sperrung und/oder eine einseitige Sperrung bewirken (so dass bspw. nur von einer Seite die Türkomponente geöffnet werden kann). Hierzu kann z. B. eine Kopplung eines Türgriffs (Türdrücker) der Türkomponente mit einem Schloss der Türkomponente in Abhängigkeit von der Konfiguration und/oder Türfunktion kontrolliert (bspw. angesteuert) werden, bspw. derart, dass nur die Betätigung eines Türgriffs auf einer der Seiten der Türkomponente (d. h. eine einseitige Betätigung) zur Betätigung des Schlosses, insbesondere einer Schlossfalle, führt. Damit kann bspw. eine für viele Anwendungen des Türsystems sinnvolle Funktion bereitgestellt werden, bspw. für Ausgangstüren, die nur ein einseitiges Öffnen von Innen, allerdings kein Eintreten von außen, ermöglichen sollen.

Zur Erkennung bzw. Bestimmung des wenigstens einen Antriebsparameters kann es vorgesehen sein, dass von der Erkennungseinheit ein Empfang und/oder eine Auswertung von Signalen erfolgt, bspw. von elektrischen Signalen wenigstens einer Sensorkomponente und/oder von empfangenen Signalen einer Kommunikationsverbindung, bspw. von Internetdaten, bspw. durch eine Empfangskomponente der Erkennungseinheit. Dabei kann es möglich sein, dass diese Antriebsparameter zumindest teilweise bereits original durch das Türsystem erhoben werden, und/oder durch eine originär vorhandene Schnittstelle bereitgestellt werden. Antriebsparameter, welche originär durch das Türsystem durch die Erkennungseinheit erhoben werden, können bspw. einen Nutzungszyklus (bspw. als eine Zyklusanzahl, d. h. bspw. einer Zählung der Bewegungsvorgänge, wie Öffnungs- und/oder Schließvorgänge) und/oder eine Betriebsdauer und/oder eine Kennung (wie eine Seriennummer) und/oder eine Konfiguration (wie eine Programmierung des Türsystems) und/oder ein Betriebsprotokoll (Nutzungsprotokoll) und/oder wenigstens eine Fehlerinformation und/oder dergleichen umfassen. Daneben kann es möglich sein, dass auch weitere Antriebsparameter bestimmt werden, ggf. auch durch andere Geräte bzw. aus anderen Quellen als der Erkennungseinheit (wie bspw. eine Bildinformation durch einen Kamerasensor der Kommunikationseinheit, welche dann ggf. an die Übertragungseinheit ggf. kabellos übertragen werden kann). Damit können umfangreiche Informationen zur Bestimmung der Antriebsparameter genutzt werden.

Weiter ist es denkbar, dass zum Aussenden und/oder zur Übertragung der (durch die Erkennungseinheit) bestimmten Antriebsparameter an die Kommunikationseinheit (und/oder von der Kommunikationseinheit an die Erkennungseinheit und/oder an die Kontrolleinheit des Türsystems) wenigstens ein Schnittstellenelement der Übertragungseinheit vorgesehen ist. Das Schnittstellenelement dient dabei bspw. dazu, Informationen (insbesondere Antriebsparameter) an die Kommunikationseinheit zu senden und/oder von der Kommunikationseinheit zu empfangen. Es kann dabei das Schnittstellenelement somit als ein uni- oder bidirektionales Kommunikationsschnittstellenelement ausgeführt sein, sodass ggf. eine Informationsübertragung in nur eine oder in zwei Richtungen möglich ist. Weiter kann optional auch ein weiteres Schnittstellenmittel oder auch ein weiteres Schnittstellenelement vorgesehen sein, um Informationen, wie den Antriebsparameter, an weitere Komponenten des Türsystems oder an weitere Türsysteme (ggf. kabellos) zu übertragen und/oder von diesen zu empfangen. Die weiteren Komponenten umfassen bspw. die Erkennungseinheit und/oder die Kontrolleinheit. Auch kann es möglich sein, dass die Übertragungseinheit ein Speicherelement umfasst, um die Informationen (wie die Antriebsparameter) persistent oder zwischen zu speichern. Insbesondere wird dabei ein Nachrüsten der Übertragungseinheit dadurch ermöglicht, dass die Übertragungseinheit an eine bereits originär beim Türsystem vorhandene Schnittstelle angepasst ist, bspw. eine Wartungsschnittstelle oder dergleichen, und/oder mit dieser (elektrisch) verbunden wird, insbesondere über ein Anschlussschnittstellenelement.

Optional kann die Übertragungseinheit ein Speicherelement zur Speicherung von wenigstens einem Antriebsparameter aufweisen. Dabei kann das Speicherelement als ein nicht-flüchtiger Datenspeicher, bspw. als ein Flash-Speicher, ausgeführt sein. Es kann dabei auch möglich sein, dass die Übertragungseinheit ein Verarbeitungselement aufweist, um eine Verarbeitung und/oder Auswertung und/oder Analyse des wenigstens einen Antriebsparameters durchzuführen. Entsprechend kann die Übertragungseinheit als "intelligente" Übertragungseinheit ausgeführt sein, und somit auf einfache Weise ein Vielzahl von Funktionen in das Türsystem integrieren. Damit kann der Funktionsumfang des Türsystems in kostengünstiger und technisch einfacher Weise erheblich erweitert werden. Alternativ kann es auch möglich sein, dass die Übertragungseinheit ohne Speicherelement ausgeführt ist (oder das Speicherelement ggf. nur zur Zwischenspeicherung vorgesehen ist), sodass durch die Übertragungseinheit lediglich eine Übertragung von Daten erfolgt. In diesem Fall ist es z. B. möglich, dass ein Großteil der Verarbeitung (z. B. zur Auswertung oder Weiterübertragung des Antriebsparameter an das Speichersystem) durch die Kommunikationseinheit übernommen wird. Damit kann der Aufwand zur Herstellung der Übertragungseinheit weiter reduziert werden.

Vorzugsweise kann das Türsystem und/oder die Übertragungseinheit derart nachrüstbar ausgeführt sein, dass das Türsystem ohne die Übertragungseinheit keinerlei Netzwerk- und/oder Bluetooth-Kommunikationsfähigkeit aufweist und/oder nur eine im Vergleich zur Übertragungseinheit veraltete (d. h. versionsniedrigere) Kommunikationsfähigkeit und/oder nur eine kabelgebundene Kommunikationsfähigkeit umfasst. Entsprechend kann es möglich sein, dass die Übertragungseinheit bei Integration in das Türsystem die Kommunikationsfähigkeit des Türsystems erweitert. Hierzu kann die Übertragungseinheit bspw. an eine speziell für die Übertragungseinheit vorgesehene und damit für die Übertragungseinheit spezifische Schnittstelle des Türsystems verbunden werden. Eine solche Schnittstelle kann bspw. bei der Kontrolleinheit vorgesehen sein. Auch kann es möglich sein, dass die Übertragungseinheit an eine bestehende (für die Übertragungseinheit unspezifische) Schnittstelle des Türsystems angeschlossen wird, bspw. eine Bus- und/oder Netzwerk- und/oder seriellen Schnittstelle einer bereits im Türsystem vorhandenen Kommunikationsfähigkeit. Damit kann der Vorteil erzielt werden, dass die Übertragungseinheit eine bestehende (ggf. technisch unflexiblere, z. B. kabelgebundene) Schnittstelle des Türsystems nutzt, und diese um eine weitere Schnittstelle (d. h. ein Schnittstellenelement, welches ggf. eine technisch flexiblere Schnittstelle ist, wie eine Funkschnittstelle) in technisch einfacherer Weise erweitert.

Vorzugsweise kann die Übertragungseinheit ein Verarbeitungselement und/oder ein Speicherelement aufweisen, um ggf. eine komplexe Verarbeitung der (insbesondere über die Schnittstelle) übertragenen Daten durchzuführen, bspw. eine Umwandlung in Antriebsparameter oder in ein bestimmtes (digitales) Format der Antriebsparameter. Alternativ kann es auch möglich sein, dass die Übertragungseinheit speicher- und/oder verarbeitungselement-frei ausgeführt ist und/oder keine Verarbeitung der übertragenen Daten durchführt und/oder keine Umwandlung der übertragenen Daten durchführt, welche nicht nur auf einer Übertragungsprotokollebene notwendig ist (d. h. es erfolgt keine Veränderung der zu übertragenen Informationen bzw. Nutzdaten). Mit anderen Worten kann die Übertragungseinheit auch lediglich eine nutzdatenunveränderliche Übertragung (bspw. des Antriebsparameters) durchführen, bspw. von der (originären) Schnittstelle des Türsystems zum Schnittstellenelement der Übertragungseinheit, damit von dieser ein Aussenden des Antriebsparameters erfolgen kann.

Auch kann es möglich sein, dass die Übertragungseinheit eine Sensorik aufweist, bspw. die Erkennungseinheit, um bspw. eine Bestimmung der Antriebsparameter durchzuführen. Somit können (zumindest einige) der auszusendenden Antriebsparameter durch die Übertragungseinheit selbst bestimmt werden. Hierdurch kann ggf. auch die Erweiterbarkeit des Türsystems erhöht werden, wenn durch die Übertragungseinheit auch weitere Sensoren bereitgestellt werden können.

Weiter kann es auch möglich sein, dass die Kommunikationseinheit wenigstens einen Datenspeicher und/oder wenigstens ein Verarbeitungsmittel, bspw. einen integrierten Schaltkreis und/oder Prozessor, aufweist, um vorzugsweise den wenigstens einen Antriebsparameter zu speichern und/oder zu verarbeiten und/oder auszuwerten. Bspw. kann hierzu eine Analyse der gespeicherten Antriebsparameter erfolgen, z. B. über eine App der Kommunikationseinheit. Der Datenspeicher dient bspw. zur persistenten Speicherung des wenigstens einen Antriebsparameters. Alternativ kann der Datenspeicher auch nur zur Zwischenspeicherung des Antriebsparameters dienen oder diese nicht speichern, sodass die Kommunikationseinheit lediglich zur Übertragung des Antriebsparameters zu dem Speichersystem dient. Dies ermöglicht insbesondere eine Verbesserung der Übertragung der Antriebsparameter.

Ein besonderer Vorteil kann sich dadurch ergeben, dass der wenigstens eine (bestimmte) Antriebsparameter nicht direkt von dem Türsystem oder der Erkennungseinheit des Türsystems an das türsystemferne Speichersystem übertragen werden muss, sondern über die Übertragungseinheit und/oder über die Kommunikationseinheit (ggf. kabellos) übertragen werden kann. Insbesondere kann damit das Türsystem besonders einfach und kostengünstig ausgeführt sein, da keine aufwendige Elektronik bzw. Schnittstelle zur Übertragung des Antriebsparameters direkt an das Speichersystem bei der Erkennungseinheit bzw. beim Türsystem vorgesehen sein muss. Eine solche Elektronik / Schnittstelle muss zur Datenübertragung bspw. eine aufwendige Netzwerk- und/oder Internet-Kommunikation durchführen, wenn das Speichersystem durch das Türsystem nur über ein Netzwerk (Local Area Network, d. h. LAN, oder Wireless LAN oder Mobilfunknetzwerk oder Internet) erreichbar ist. Hierdurch steigt der Aufwand bei der Herstellung und Montage des Türsystems sowie die Komplexität und der Energieverbrauch drastisch an. Hingegen kann die Übertragung (d. h. insbesondere das Senden) des wenigstens einen Antriebsparameters über bzw. durch die Übertragungseinheit an die Kommunikationseinheit technisch einfacher und energiesparsamer erfolgen. So kann bspw. die Übertragungseinheit BLE nutzen, um die Übertragung an die Kommunikationseinheit durchzuführen. Die weitere Übertragung des wenigstens einen Antriebsparameters erfolgt dann durch die Kommunikationseinheit. Da die Kommunikationseinheit bspw. ein Gerät sein kann, welches bereits durch einen Bediener verwendet wird und/oder bereits mit dem Netzwerk, insbesondere Internet und/oder Mobilfunknetz, verbunden ist, kann hierdurch eine deutliche Energieeinsparung bzw. Einsparung des technischen Aufwands erfolgen. Bspw. ist dabei die Kommunikationseinheit als ein Smartphone des Bedieners ausgeführt, und/oder umfasst ein Computerprogramm, welches für die Übertragung und/oder an das Türsystem und/oder an die Übertragungseinheit angepasst ist.

Ein weiterer Vorteil kann sich dadurch ergeben, dass der wenigstens eine (bestimmte) Antriebsparameter nicht direkt von dem Türsystem oder der Erkennungseinheit des Türsystems an die Kommunikationseinheit übertragen werden muss, sondern über die Übertragungseinheit an die Kommunikationseinheit übertragen wird. Dies ermöglicht bspw. das einfache Nachrüsten oder Anpassen des Türsystems mit der Übertragungseinheit.

Es kann weiter möglich sein, dass mehrere Türsysteme und/oder Übertragungseinheiten für eine Übertragung des wenigstens einen Antriebsparameters und/oder weiterer Informationen an (wenigstens oder genau) eine (einzige) Kommunikationseinheit ausgeführt sind. Insbesondere kann es möglich sein, dass die Kommunikationseinheit Verbindungsinformationen für mehrere Türsysteme und/oder Übertragungseinheiten aufweist. Dies hat den Vorteil, dass diese mehreren Türsysteme und/oder Übertragungseinheiten gemeinsam die eine Kommunikationseinheit nutzen können, um Informationen (wie den wenigstens einen Antriebsparameter) an das Speichersystem zu übertragen. Damit kann auch eine weitere Kosten- und/oder Energieeinsparung erfolgen. Dabei kann es auch möglich sein, dass (lediglich) eines der Türsysteme die Kommunikationseinheit (bspw. fest integriert) aufweist und/oder mit einer solchen verbunden ist. Auch kann es möglich sein, dass die Kommunikationseinheit als eine tragbare Kommunikationseinheit ausgeführt ist, und ggf. zur Übertragung in die Nähe der jeweiligen Türsysteme und/oder Übertragungseinheiten gebracht werden muss.

Insbesondere kann es vorgesehen sein, dass der wenigstens eine Antriebsparameter zyklisch und/oder in unregelmäßigen Abständen, bspw. maximal einmal täglich (oder auch maximal jeden zweiten oder dritten Tag), insbesondere über die Übertragungseinheit und/oder Kommunikationseinheit, an das Speichersystem übertragen wird. Dies hat den Vorteil, dass die Kommunikationseinheit nicht dauerhaft mit dem Speichersystem in Datenverbindung stehen muss, sodass eine weitere Energieersparnis möglich ist. Bspw. kann es vorgesehen sein, dass eine Übertragung des Antriebsparameters (d. h. ggf. ein Aussenden des Antriebsparameters oder sämtlicher bestimmter und ggf. zwischengespeicherter Antriebsparameter durch die Übertragungseinheit) nur zu bestimmten Zeitpunkten oder bei bestimmten Ereignissen erfolgt und/oder in bestimmten zeitlichen Abständen erfolgt und/oder nur dann erfolgt, wenn sich die Kommunikationseinheit in Kommunikationsreichweite zur Übertragungseinheit befindet. Bspw. kann es daher auch möglich sein, dass die Übertragungseinheit ein Speicherelement aufweist, um bis zu dem Aussenden die (durch die Erkennungseinheit) bestimmten Antriebsparameter zwischenzuspeichern. Dadurch kann die Energieeffizienz weiter verbessert werden.

Es ist denkbar, dass die Kommunikationseinheit und/oder wenigstens eine weitere Kommunikationseinheit als Mobilfunkkommunikationseinheit, insbesondere als Mobiltelefon, und/oder als Smartphone und/oder als Smartwatch und/oder als Wearable (Wearable Computer) und/oder als Computer und/oder als Laptop und/oder als Teil eines weiteren Türsystems ausgeführt ist. Bevorzugt umfasst die Kommunikationseinheit wenigstens einen Sensor, bspw. einen Ortungssensor (z. B. GPS-Sensor) und/oder einen Beschleunigungssensor und/oder einen Kamerasensor und/oder einen akustischen Sensor.

Es kann vorgesehen sein, dass die Kommunikationseinheit (bzw. wenigstens eine der Kommunikationseinheiten), insbesondere der wenigstens eine Sensor der Kommunikationseinheit, zur Bestimmung des wenigstens einen Antriebsparameters genutzt wird. Bspw. kann es möglich sein, dass die Erkennungseinheit des Türsystems zur Bestimmung von ersten Antriebsparametern und die Kommunikationseinheit zur Bestimmung von zweiten Antriebsparametern vorgesehen ist, wobei sich die ersten und zweiten Antriebsparameter voneinander unterscheiden. Bspw. kann der wenigstens eine durch die Kommunikationseinheit(en) bestimmte Antriebsparameter über eine kabellose Datenübertragung an das Türsystem und/oder an das Speichersystem übertragen werden, und ggf. vor der (jeweiligen) Übertragung im Türsystem und/oder in der Kommunikationseinheit zwischengespeichert werden. Bevorzugt kann dabei der wenigstens eine Antriebsparameter durch die Kommunikationseinheit dadurch bestimmt werden, dass eine Erfassung durch wenigstens einen Sensor und/oder ein Abruf von Informationen, bspw. über eine Internetverbindung (z. B. von Wetterdaten) und/oder über eine Benutzerschnittstelle (z. B. von einer Benutzereingabe) erfolgt.

Des Weiteren kann es möglich sein, dass die Kommunikationseinheit wenigstens eine Übertragungsschnittstelle aufweist, bevorzugt eine Funkübertragungsschnittstelle, insbesondere eine Mobilfunkkommunikationsschnittstelle und/oder WLAN- und/oder Bluetooth-Schnittstelle. Bevorzugt kann die Übertragungsschnittstelle dazu ausgeführt sein, das Übertragen des wenigstens einen empfangenen Antriebsparameters (zumindest teilweise über Funk und/oder kabellos) durchzuführen. Insbesondere erfolgt dabei das (ggf. kabellose) Übertragen des (wenigstens einen empfangenen) Antriebsparameters zumindest teilweise über Funk an ein türsystemfernes Speichersystem, insbesondere an eine türsystemferne Datenbank, sodass vorzugsweise der übertragene Antriebsparameter türsystemfern (durch das Speichersystem) bereitstellbar ist.

Es kann vorgesehen sein, dass die Kommunikationseinheit durch ein Computerprogramm betrieben wird, wobei das Computerprogramm bspw. in einem Datenspeicher der Kommunikationseinheit persistent gespeichert ist. Insbesondere kann das Computerprogramm als eine Smartphone-App ausgeführt sein. Das Computerprogramm dient bspw. dazu, den empfangenen Antriebsparameter auszuwerten und/oder die Übertragung an das Speichersystem und/oder an die Übertragungseinheit des Türsystems zu initiieren.

Bevorzugt kann dabei die Kommunikationseinheit, insbesondere das Computerprogramm, ein oder mehrere Verbindungsinformationen zu ein oder mehreren Übertragungseinheiten bzw. Türsystemen aufweisen. Bspw. können mehrere Verbindungsinformationen vorgesehen sein, welche jeweils die Verbindung zu unterschiedlichen Türsystemen ermöglichen und/oder unterschiedlichen Türkomponenten bzw. Türsystemen zugeordnet sind. Vorzugsweise kann dabei die jeweilige Verbindungsinformation bei einem Erstverbindungsprozess, insbesondere einem Bluetooth-Pairing, zwischen der Kommunikationseinheit und einer jeweiligen Übertragungseinheit (ggf. eines jeweiligen oder einzigen Türsystems) bestimmt worden sein. Somit kann das Computerprogramm die Verbindung zu mehreren Übertragungseinheiten und/oder Türsystemen verwalten, um so von diesen jeweiligen Übertragungseinheiten bzw. Türsystemen Antriebsparameter zu empfangen und/oder an das Speichersystem zu übertragen. Insbesondere kann somit eine sichere Verbindung gewährleistet werden.

Bevorzugt kann die Übertragungseinheit eine (türsystemseitige) Verbindungsinformation und/oder ein Sicherheitsmerkmal aufweisen, wobei besonders bevorzugt die Verbindungsinformation und/oder das Sicherheitsmerkmal in einem Speicherelement der Übertragungseinheit (persistent) gespeichert ist. Bspw. umfasst die Verbindungsinformation und/oder das Sicherheitsmerkmal der Übertragungseinheit zumindest eine Kennung und/oder zumindest einen Schlüssel und/oder zumindest ein Passwort und/oder dergleichen.

Es kann dabei möglich sein, dass die Verbindungsinformation bei einer (ggf. ersten) Verbindung mit der Kommunikationseinheit (Erstverbindungsprozess) zumindest teilweise bestimmt, insbesondere generiert, wird, bspw. anhand des Sicherheitsmerkmals als fest vorgegebenes Sicherheitsmerkmal. Vorzugsweise ist eine erste (türsystemseitige) Verbindungsinformation der Übertragungseinheit vorgesehen, und eine zweite (kommunikationseinheitseitige) Verbindungsinformation der Kommunikationseinheit vorgesehen. Bspw. kann bei einem Verbindungsprozess, insbesondere dem Erstverbindungsprozess oder weiteren Verbindungsprozessen, die erste mit der zweiten Verbindungsinformation verglichen werden, um so eine Authentifizierung durchzuführen. Bevorzugt kann in Abhängigkeit von diesem Vergleich eine Verbindung zwischen der Übertragungseinheit und der Kommunikationseinheit zur Übertragung des Antriebsparameters autorisiert und/oder hergestellt werden.

Insbesondere kann die (türsystemseitige) Verbindungsinformation und/oder das Sicherheitsmerkmal (wie ein Passwort) wenigstens teilweise fest und/oder unveränderbar in der Übertragungseinheit gespeichert, vorzugsweise kryptographisch gesichert, sein.

Auch kann es möglich sein, dass die (türsystemseitige) Verbindungsinformation und/oder das Sicherheitsmerkmal veränderbar ausgeführt ist, und bspw. durch die Kommunikationseinheit veränderbar ist, vorzugsweise über das Computerprogramm der Kommunikationseinheit. Hierzu kann vorzugsweise eine (ggf. zusätzliche und/oder strengere) Authentifizierung notwendig sein, um einen kryptographischen Schutz der Verbindungsinformation und/oder des Sicherheitsmerkmals aufzuheben, und damit die Veränderung zu ermöglichen. Bevorzugt kann die (türsystemseitige) Verbindungsinformation und/oder das Sicherheitsmerkmal auch in einer anderen Komponente des Türsystems gespeichert sein (bspw. in einem Türschließer), und durch die Übertragungseinheit ausgelesen werden.

Des Weiteren ist auch denkbar, dass das Aussenden des Antriebsparameters durch die Übertragungseinheit und/oder das Empfangen des Antriebsparameters durch die Kommunikationseinheit verbindungslos und/oder verschlüsselt erfolgt.

Ferner kann es möglich sein, dass bei wenigstens einer oder jeder Verbindung zwischen der Kommunikationseinheit und der Übertragungseinheit (d. h. bei dem Verbindungsprozess) wenigstens eine Verbindungsprotokollinformation, insbesondere eine Nutzerinformation und/oder ein Zeitstempel und/oder eine Verbindungsdauer und/oder eine durch die Verbindung übertragene Information, insbesondere Kontrollinformation und/oder Konfiguration, und/oder dergleichen, ausgewertet und/oder gespeichert und/oder protokolliert wird. Vorzugsweise kann wenigstens einer der Antriebsparameter in Abhängigkeit von der Verbindungsprotokollinformation bestimmt werden, bspw. die Nutzerinformation aufweisen. Auf diese Weise kann bspw. ausgewertet werden, insbesondere anhand des türsystemfernen Speichersystems, wer zu ggf. welchem Zeitpunkt die Verbindung hergestellt hat. Bspw. kann dabei auch ausgewertet werden, welche Kontrollinformation übertragen wurde (bspw. von der Kommunikationseinheit an die Übertragungseinheit zur Kontrolle, insbesondere Steuerung, der Türkomponente). Bevorzugt umfasst dabei die Nutzerinformation wenigstens einen Benutzer-Identifikator, bspw. eine eindeutig dem Benutzer der Kommunikationseinheit und/oder einer Verbindungsinformation (z. B. Benutzername und Passwort) zugeordnete Kennung oder dergleichen.

Es ist denkbar, dass in einem Objekt (d. h. insbesondere in einem Installationsobjekt, bspw. ein Gebäude, oder eine Gruppe oder eine logische Zusammenfassung von Türsystemen oder dergleichen) oder in mehreren Objekten jeweils genau ein Türsystem oder mehrere Türsysteme vorhanden sind und/oder jeweils mit einer (ggf. einzigen) Kommunikationseinheit genutzt werden. Bspw. kann die Kommunikationseinheit in einem der Türsysteme des Objekts integriert sein oder tragbar ausgeführt sein, und somit vorzugsweise zum Empfang in die Kommunikationsreichweite der jeweiligen Türsysteme gebracht werden. Wenn die Übertragungseinheit der jeweiligen Türsysteme eine verbindungsbehaftete Kommunikationstechnologie, insbesondere Bluetooth-Kommunikation, unterstützt, kann es vorgesehen sein, dass die Kommunikationseinheit mit wenigstens einem oder jedem der jeweiligen Übertragungseinheiten verbunden, bspw. gepairt, werden kann, ggf. auch zu unterschiedlichen Zeitpunkten. Es ist weiter möglich, dass in dem einen oder den mehreren Objekte jeweils mehrere Türkomponenten vorgesehen sind, und vorzugsweise deren jeweilige Türfunktion (insbesondere auch der Bewegungszustand) durch die Antriebsparameter angepasst werden kann. Auch können ggf. mehrere Türkomponenten in einem Türsystem vorhanden sein. Bevorzugt werden dabei die mehreren Türkomponenten bzw. die Antriebseinheiten der jeweiligen Türkomponenten jeweils durch eine (einzige) Kontrolleinheit der jeweiligen Türsysteme kontrolliert (bspw. angesteuert).

Vorteilhafterweise kann über die Kommunikationseinheit der wenigstens eine (durch die Kommunikationseinheit empfangene) Antriebsparameter an ein türsystemfernes Speichersystem (ggf. zumindest teilweise kabellos) übertragen werden, d. h. bspw. von der Kommunikationseinheit an das Speichersystem z. B. über ein Netzwerk gesendet werden, und/oder im Anschluss von dem Speichersystem empfangen werden, und/oder umgekehrt. Optional kann auch der von dem Speichersystem empfangene Antriebsparameter ggf. zu einem späteren Zeitpunkt oder ein anderer Antriebsparameter (bspw. für eine Konfiguration) an das Türsystem (insbesondere die Übertragungseinheit) durch die Kommunikationseinheit weitergeleitet werden. Auch kann es möglich sein, dass anhand des (insbesondere von dem Speichersystem empfangenen) Antriebsparameters die Kommunikationseinheit (insbesondere über ein Computerprogramm wie eine App) eine Konfiguration des Türsystems bestimmt und/oder an das Türsystem, insbesondere die Übertragungseinheit, überträgt. Alternativ oder zusätzlich kann die Konfiguration auch außerhalb dieses Systems erstellt werden und/oder von dem Speichersystem an die Kommunikationseinheit übertragen werden.

Insbesondere bezieht sich der Ausdruck "türsystemfern" darauf, dass das Speichersystem außerhalb des Türsystems vorgesehen ist. Bevorzugt kann das Speichersystem dabei ebenfalls außerhalb der Kommunikationseinheit vorgesehen sein. Vorzugsweise ist das Speichersystem räumlich beabstandet zum Türsystem und/oder zur Kommunikationseinheit ausgeführt, und weist insbesondere einen Abstand zum Türsystem und/oder zur Kommunikationseinheit von vorzugsweise größer als 1 Meter (m), bevorzugt größer als 10 m, besonders bevorzugt größer als 100 m, insbesondere größer als 1000 m und/oder im Bereich von 1 m bis 100 (oder 1000 oder 10000) Kilometer (km), vorzugsweise 5 m bis 50 km, bevorzugt 10 m bis 10 km, besonders bevorzugt 100 m bis 1 km auf. Besonders bevorzugt steht das Speichersystem in Datenverbindung mit der Kommunikationseinheit, z. B. über ein oder mehrere Netzwerke.

Insbesondere erfolgt die Übertragung des wenigstens einen (empfangenen) Antriebsparameters von der Kommunikationseinheit zum Speichersystem zunächst durch eine Funkübertragung (bspw. von der Kommunikationseinheit zu wenigstens einer Zwischenstelle). Die Zwischenstelle ist bspw. ein Hotspot (z. B. WLAN oder Mobilfunk-Hotspot) und/oder ein Access-Point (z. B. für WLAN) und/oder eine Basisstation eines Mobilfunknetzes und/oder eine Netzwerkkomponente (bspw. Hub / Switch / Repeater) eines (Daten-) Netzwerkes und/oder dergleichen. Es kann möglich sein, dass neben dieser Funkschnittstellenübertragung noch eine weitere Übertragungsart zum Einsatz kommt, bspw. eine kabelgebundene Übertragung, um den wenigstens einen Antriebsparameter (bspw. ausgehend von der Zwischenstelle) zum Speichersystem zu übertragen. Bspw. kann das Speichersystem durch wenigstens eine Datenverarbeitungsanlage, bspw. in einem Rechenzentrum oder dergleichen, bereitgestellt werden. Somit kann es möglich sein, dass (zumindest teilweise) zum und/oder innerhalb des Rechenzentrums eine kabelgebundene Übertragung des (z. B. von der Zwischenstelle empfangenen) Antriebsparameters erfolgt. Diese kabelgebundene Übertragung umfasst bspw. eine Internetübertragung und/oder eine Netzwerkübertragung (z. B. eines Local Area Networks) und/oder eine DSL (Digital Subscriber Line) Übertragung und/oder dergleichen. Damit kann eine zuverlässige und schnelle Übertragung des Antriebsparameters gewährleistet werden.

Es kann dabei auch möglich sein, dass zur Übertragung mehrere Antriebsparameter gebündelt übertragen werden (bspw. als Datenpakete) und/oder verschlüsselt und/oder moduliert übertragen werden.

Bevorzugt erfolgt keine Kommunikation des Türsystems mit dem türsystemfernen Speichersystem ohne Nutzung der Kommunikationseinheit. Mit anderen Worten erfolgt bei dem Türsystem die Kommunikation mit dem Speichersystem, bspw. das Übertragen des wenigstens einen Antriebsparameters, ausschließlich unter Nutzung der Kommunikationseinheit. Dies hat den Vorteil, dass das Türsystem originär nicht die Kommunikationstechnologie der Übertragungsschnittstelle der Kommunikationseinheit implementieren muss, und dennoch mit dem Speichersystem zumindest indirekt verbindbar ist.

Vorzugsweise ist das Speichersystem als ein nicht-flüchtiges Speichersystem zur persistenten Datenspeicherung und/oder als ein Datenbanksystem ausgeführt. Insbesondere stellt dabei das Speichersystem Funktionen zur elektronischen Datenverwaltung und/oder Datenspeicherung und/oder Datenbereitstellung und/oder Datenauswertung und/oder Datenanalyse bereit. Bevorzugt ist das Datenbanksystem als ein relationales Datenbanksystem ausgeführt. Das Datenbanksystem umfasst dabei z. B. wenigstens eine Datenbank und/oder ein Datenbankmanagementsystem. Des Weiteren kann das Speichersystem wenigstens eine Schnittstelle zum Zugriff auf die darin gespeicherten Daten aufweisen, bspw. eine SQL Schnittstelle oder dergleichen. Bevorzugt ist das Speichersystem dazu ausgeführt, die zum Speichersystem übertragenen Antriebsparameter persistent zu speichern und/oder zu verwalten und/oder auszuwerten, und/oder eine Benutzeroberfläche zur Durchführung dieser Funktionen bereitzustellen.

Es ist denkbar, dass Antriebsparameter unterschiedlicher Türsysteme (d. h. bspw. der Antriebsparameter des Türsystems und wenigstens ein weiterer Antriebsparameter eines weiteren Türsystems) bestimmt und/oder im Speichersystem gespeichert und/oder ausgewertet werden. Bevorzugt erfolgt dabei eine Zuordnung des Antriebsparameters zum Türsystem, in welchem der Antriebsparameter bestimmt wurde, bspw. anhand einer Kennung des Türsystems.

Insbesondere kann es auch vorgesehen sein, dass die Antriebsparameter der Türsysteme im Speichersystem und/oder türsystemfern durch eine Auswerteeinheit des Speichersystems ausgewertet, z. B. verarbeitet und/oder analysiert und/oder miteinander verglichen, werden, vorzugsweise sodass ein Auswertungsergebnis der Auswertung bestimmt wird, insbesondere welches mit den Antriebsparametern der unterschiedlichen Türsysteme korreliert ist. Vorzugsweise kann anhand des Auswertungsergebnis wenigstens eines der Türsysteme betrieben werden und/oder geprüft werden (z. B. gemäß einer Fehlerprüfung) und/oder analysiert werden (bspw. eine Wartungsinformation ermittelt werden).

Dabei ist vorgesehen, dass (insbesondere türsystemfern) wenigstens eine Information, insbesondere wenigstes ein Antriebsparameter des wenigstens einen Türsystems und/oder wenigstens eines weiteren Türsystems, aus dem Speichersystem ausgelesen und ausgewertet wird, insbesondere verarbeitet und/oder analysiert wird. Hierzu ist bspw. wenigstens eine Datenverarbeitungsanalage, insbesondere Auswerteeinheit, vorgesehen, welche das Speichersystem (bspw. als Datenbank) umfasst oder damit verbunden ist. Bspw. kann die Auswertung der Information wenigstens eine statistische Analyse oder dergleichen umfassen. Vorteilhafterweise können Antriebsparameter unterschiedlicher Art im Speichersystem gespeichert sein, bspw. Antriebsparameter mit Informationen über einen Standort des (jeweilig zugeordneten) Türsystems (Ortungsinformation) und/oder Antriebsparameter mit Informationen über eine Kennung des jeweilig zugeordneten Türsystems. Auch ist es denkbar, dass Antriebsparameter unterschiedlicher Türsysteme im Speichersystem gespeichert sind. Die türsystemferne Auswertung und/oder Analyse kann dann bspw. wenigstens einen Vergleich und/oder eine Auswertung einer Korrelation wenigstens eines Teils dieser gespeicherten Antriebsparameter umfassen.

Bspw. kann eine Auswertung und/oder Analyse der Antriebsparameter (türsystemfern) derart erfolgen, dass eine Wartungsinformation (Planungsinformation) bestimmt wird. So können bspw. verschiedene Antriebsparameter (wie die Nutzungsinformation, Nutzungszyklen, Kennungen, Fehlerinformationen, und/oder dergleichen) dazu genutzt werden, die Türsysteme zu bestimmen, bei welchen aktuell oder zukünftig eine Wartung durchgeführt werden sollte. Hierzu kann bspw. die Auswertung und/oder Analyse anhand vorbestimmter Kriterien durchgeführt werden, z. B. einen Vergleich der Antriebsparameter und/oder weiterer Informationen durchführen. Auch kann es möglich sein, dass anhand der Antriebsparameter ein Trend oder eine Vorhersage getroffen wird (bspw. für Defekte, Ausfälle, Wartungen), ggf. auch in Abhängigkeit von einem Standort. Entsprechend kann die Auswertung und/oder Analyse auch Filterfunktionen umfassen, um bspw. anhand des ausgewählten Filters nur solche Antriebsparameter für die Auswertung/Analyse zu nutzen, welche eine bestimmte Vorgabe erfüllen (bspw. eine bestimmte Ortsinformation und/oder Kennung aufweisen).

Weiter kann es möglich sein, dass anhand der Auswertung und/oder Analyse eine Konfiguration für das Türsystem bzw. zumindest einige der Türsysteme bestimmt wird. Auch ist es denkbar, dass wenigstens eine bestehende Konfiguration durch die Antriebsparameter von einem Türsystem an das Speichersystem zunächst zu übertragen, dann modifiziert, und anschließend wieder zum Türsystem übertragen wird. Damit kann bspw. der Betrieb des Türsystems anhand der Antriebsparameter verbessert werden.

Dabei ist es denkbar, dass die im türsystemfernen Speichersystem zu speichernden Informationen, insbesondere Antriebsparameter, von mehrere Türsystemen und/oder mehreren Kommunikationseinheiten an das Speichersystem als ein zentrales Speichersystem übertragen werden. Bspw. kann das Speichersystem Antriebsparameter von mindestens 10 oder 100 oder 1000 oder 10000 verschiedenen Türsystemen und/oder Kommunikationseinheiten empfangen und/oder speichern. Damit kann insbesondere eine umfassende Informationsdatenbank erstellt werden, welche eine zuverlässige Analyse erlaubt.

Bspw. können die Antriebsparameter auch Herstellerinformationen und/oder Partnerinformationen umfassen. Die Herstellerinformationen betreffen bspw. Informationen über einen Hersteller, insbesondere des Türsystems. Die Partnerinformationen betreffen bspw. Informationen, insbesondere eine Partnerkennung, welche einem Vertriebspartner und/oder Installateur des Türsystems eindeutig zugeordnet sind. Anhand dieser Antriebsparameter kann bspw. eine besonders zuverlässige Analyse der im Speichersystem gespeicherten Informationen erfolgen, da bspw. Wartungsinformationen und/oder Planungsinformationen ermittelt und an die betroffenen Partner übertragen werden können. Dabei kann es auch möglich sein, dass ein solcher Partner einen geschützten Zugang zu den ihm zugeordneten gespeicherten Informationen erhält, bspw. durch eine Authentifizierung am Speichersystem.

Bevorzugt umfasst das Speichersystem eine Zugangskomponente, bspw. mit einer Benutzeroberfläche, um auf die im Speichersystem gespeicherten Informationen zugreifen zu können und/oder diese auswerten bzw. analysieren zu können. Bspw. stellt die Zugangskomponente einen Authentifizierungsprozess bereit, damit ein Bediener und/oder Partner und/oder Hersteller sich für den Zugriff authentifizieren kann. Insbesondere kann auch ein Zugriff auf die Zugangskomponente durch eine App oder dergleichen vorgesehen sein.

Vorzugsweise kann ein Computerprogramm, insbesondere eine App, der Kommunikationseinheit vorgesehen sein, welche bspw. eine Konfiguration und/oder Programmierung von Makros für das Türsystem ermöglicht. Diese Makros können bspw. eine Befehlsabfolge z. B. zur Initiierung verschiedener Türfunktionen in Abhängigkeit von vorgegebenen Bedingungen umfassen. So ist bspw. denkbar, dass durch das Computerprogramm eine Öffnungs- und/oder Schließzeit für das Türsystem (bspw. abhängig von einer Tageszeit) konfiguriert wird.

Ferner kann es auch möglich sein, dass bspw. durch die Kommunikationseinheit eine (ggf. zumindest teilweise automatische) Funktionsprüfung bei dem Türsystem initiiert wird, um insbesondere anhand eines Ergebnisses der Funktionsprüfung wenigstens einen der Antriebsparameter zu bestimmen. In Abhängigkeit von dieser Funktionsprüfung kann bspw. festgestellt werden, dass eine Wartung des Türsystems erforderlich ist. Die Funktionsprüfung kann bspw. durch die Kommunikationseinheit (d. h. insbesondere durch das Computerprogramm) und/oder durch die Kontrolleinheit und/oder durch die Übertragungseinheit und/oder durch das Speichersystem (oder eine damit verbundene Datenverarbeitungsanlage) initiiert und/oder durchgeführt werden. Insbesondere kann die Funktionsprüfung anhand wenigstens eines der Antriebsparameter durchgeführt werden, bspw. anhand einer Bildinformation oder dergleichen.

Des Weiteren kann es möglich sein, dass die Kommunikationseinheit dazu ausgeführt ist, wenigstens einen Antriebsparameter für das Türsystem zu bestimmen. So kann bspw. ein Kamerasensor der Kommunikationseinheit genutzt werden, um eine Bild- und/oder Videoinformation über das Türsystem, insbesondere einer Bewegung der Türkomponente, zu erfassen. Diese Bild- und/oder Videoinformation kann dann bspw. als Antriebsparameter genutzt werden, um z. B. eine Funktionsprüfung am Türsystem durchzuführen.

Erfindungsgemäß ist der wenigstens eine Antriebsparameter (d. h. ein oder mehrere Antriebsparameter) für die Türfunktion, insbesondere für die Bewegung der Türkomponente und/oder für den Antrieb der Türkomponente, relevant. In anderen Worten ist Erfindungsgemäß der wenigstens eine Antriebsparameter mit (der Durchführung) der Türfunktion korreliert.

So kann es möglich sein, dass äußere Einwirkungen die Bewegung der Türkomponente direkt beeinflussen (bspw. eine Krafteinwirkung auf die Türkomponente, eine Beschädigung, eine Umgebungstemperatur oder dergleichen) oder indirekt beeinflussen (bspw. eine Tageszeit, wenn die Türkomponente zu bestimmten Tageszeiten geschlossen gehalten wird oder werden soll). Bspw. kann der Antriebsparameter für wenigstens eine der Einwirkungen spezifisch sein, z. B. eine (Mess- oder sonstige) Information darüber sein. Auch ist es denkbar, dass Antriebsparameter wie eine Nutzungsdauer, Nutzungshäufigkeit (insbesondere eine Nutzungszyklusanzahl des Öffnen und Schließens der Türkomponente) oder eine (geographische) Lokalisation der Türkomponente für den Betrieb des Türsystems, insbesondere die Bewegung der Türkomponente, relevant sind, d. h. mit diesem korreliert ist. Ein einzelner Nutzungszyklus entspricht dabei bspw. einem vollständigen Öffnen und wieder Schließen der Türkomponente, d. h. insbesondere einem vollständiger Bewegungsverlauf.

Weiter kann es im Rahmen der Erfindung vorgesehen sein, dass der wenigstens eine Antriebsparameter anhand wenigstens einer der nachfolgenden Informationen (im Folgenden auch als erste Informationen bezeichnet) bestimmt wird, durch die Erkennungseinheit und/oder durch die Kommunikationseinheit, und/oder wenigstens einen der nachfolgenden Informationen (bzw. erste Informationen) bereitstellt:
- eine Betriebsinformation des Türsystems, insbesondere ein Nutzungszyklus, insbesondere als Anzahl erfolgter Bewegungsverläufe, und/oder eine Betriebsdauer und/oder ein Betriebs- und/oder Nutzungsprotokoll und/oder eine Frequenz eines Bewegungsverlaufs, insbesondere eines Öffnens der Türkomponente, und/oder eine Geschwindigkeit des Bewegungsverlaufs,
- eine Umgebungsinformation, eine Wetterinformation und/oder eine Standortinformation und/oder eine Zeitinformation,
- eine Türsysteminformation, vorzugsweise eine Information über weitere Komponenten des Türsystems und/oder über die Art der Integration der Türkomponente in das Türsystem,
- eine Türkomponenteninformation, insbesondere eine Information über eine Art und/oder Bauform und/oder Konfiguration der Türkomponente,
- eine Kommunikationseinheitsinformation, welche durch wenigstens einen Sensor der Kommunikationseinheit bestimmt wird, bspw. eine Kamerainformation und/oder eine Bewegungsinformation und/oder eine Standortinformation,
- eine Türfunktionsinformation, vorzugsweise eine Information über eine Konfiguration, insbesondere Programmierung (bspw. von Makros), der Türfunktion,
- eine Wartungsinformation, vorzugsweise eine Information über einen Wartungszustand und/oder einen Wartungstermin und/oder einen Erstinbetriebnahmezeitpunkt und/oder einen Defekt und/oder einer letzten Wartung bei dem Türsystem,
- eine Nutzerinformation, welche insbesondere anhand eines Verbindungsprozesses der Übertragungseinheit mit der Kommunikationseinheit und/oder anhand einer Gesichtserkennung und/oder anhand eines Nutzungsprotokolls und/oder anhand einer Authentifizierung bestimmt wird.

Dabei können auch verschiedene dieser Antriebsparameter und/oder Informationen (insbesondere im türsystemfernen Speichersystem) gespeichert und/oder miteinander verglichen und/oder ausgewertet werden, sodass anhand der Antriebsparameter und/oder Informationen komplexe Rückschlüsse (wie eine Wartungsinformation oder eine Fehlerdiagnose) gezogen werden können.

Insbesondere kann es möglich sein, dass anhand des Antriebsparameters (und/oder wenigstens einen der Antriebsparameter), vorzugsweise anhand wenigstens einer Information des Antriebsparameters, insbesondere auch einer Information, anhand welcher der Antriebsparameter bestimmt wird/wurde, (bspw. durch eine Auswertung) wenigstens eine Bewertungsfunktion (insbesondere für das wenigstens eine Türsystem) bereitstellbar ist und/oder bereitgestellt wird. Bevorzugt kann dabei die Auswertung auch anhand einer Kombination und/oder eines Vergleichs von wenigstens zwei der Antriebsparameter durchgeführt werden.

Bspw. kann durch die Auswertung wenigstens eine Bewertungsfunktion bereitgestellt werden, insbesondere für das wenigstens eine Türsystem oder sämtliche Türsysteme, für die Antriebsparameter im Speichersystem gespeichert sind. Vorzugsweise umfasst dabei die Bewertungsfunktion eine Funktion zur Bestimmung wenigstens einer der nachfolgenden Informationen (im Folgenden auch als zweite Informationen bezeichnet):
- einer Statistik über das wenigstens eine Türsystem,
- eines funktioneller Status des wenigstens einen Türsystems,
- ein Ergebnis einer Funktionsprüfung des wenigstens einen Türsystems,
- einer Information über eine Lokalisation des wenigstens einen Türsystems,
- einer Hersteller- und/oder Partnerinformation des wenigstens einen Türsystems,
- eines Nutzungszyklus und/oder einer Betriebsdauerinformation über das wenigstens eine Türsystem.

Alternativ oder zusätzlich kann die Bewertungsfunktion auch eine Funktion zur Bestimmung wenigstens einer der zuvor genannten ersten Informationen aufweisen, bspw. wenn diese wenigstens eine erste Information nicht zur Bestimmung des Antriebsparameters genutzt werden/wurde und/oder diese nicht unmittelbar bekannt sind.

Es ist ferner denkbar, dass die Übertragungseinheit als eine Funk-, insbesondere Bluetooth-Übertragungseinheit ausgeführt ist, sodass das Aussenden und/oder Empfangen des Antriebsparameters zumindest teilweise über Bluetooth, vorzugsweise Bluetooth Low Energy, erfolgt. Die Nutzung des Bluetooth bzw. BLE Standards ermöglicht dabei eine energiesparende und zuverlässige Übertragung der Antriebsparameter. Alternativ oder zusätzlich kann über die Übertragungseinheit auch eine Nahfeldkommunikation oder eine andere Funkkommunikation mit der Kommunikationseinheit durchgeführt werden. Insbesondere umfasst die Übertragungseinheit zum Aussenden und/oder Empfangen ein oder mehrere Antennen, damit die Kommunikation zuverlässig durchgeführt werden kann.

Vorzugsweise kann es vorgesehen sein, dass die Übertragungseinheit als nachrüstbare Übertragungseinheit ausgeführt ist, sodass die Übertragungseinheit nachträglich in das Türsystem integrierbar (nachrüstbar) ausgeführt ist, insbesondere um das Türsystem gemäß einer Funk-Technologie (wie Bluetooth oder BLE) kommunikationsfähig zu machen.

Hierzu ist die Übertragungseinheit bspw. als Nachrüstmittel ausgeführt oder in ein Nachrüstmittel integriert. Dies ermöglicht eine einfache Erweiterung des Türsystems mit einer Kommunikationstechnologie, welche (ggf. im Türsystem ausschließlich) durch die Übertragungseinheit bereitgestellt wird, bspw. Bluetooth oder BLE. Vorzugsweise stellt die Übertragungseinheit dabei auch weitere Möglichkeiten bereit, um Antriebsparameter zu empfangen und/oder zu senden und/oder auszuwerten, bspw. zusätzlich über eine kabelgebundene Kommunikationstechnologie, z. B. Ethernet bzw. LAN. Dadurch kann bspw. eine alternative Auslesemöglichkeit für Antriebsparameter bereitgestellt werden.

Gemäß einem weiteren Vorteil kann vorgesehen sein, dass das Auswerten zumindest teilweise türsystemfern erfolgt, wobei vorzugsweise hierzu der zumindest eine Antriebsparameter zumindest teilweise kabellos übertragen und dabei durch ein türsystemfernes Speichersystem empfangen und ggf. persistent gespeichert wird, und durch eine Auswerteeinheit ausgelesen und/oder ausgewertet wird, um die Anpassungsvorgabe zu bestimmen, wobei bevorzugt die bestimmte Anpassungsvorgabe zumindest teilweise kabellos (bspw. von dem Speichersystem und/oder der Auswerteeinheit) an das Türsystem übertragen wird, sodass bei dem Türsystem das Anpassen der Türfunktion erfolgen kann. Alternativ oder zusätzlich kann das Auswerten des Antriebsparameters und/oder das Anpassen der Türfunktion bzw. des Türbetriebs anhand von Analysen mehrerer Antriebsparameter durchgeführt werden, welche im Speichersystem (insbesondere in einer Datenbank) gespeichert sind. Bspw. sind diese Antriebsparameter auch weiteren Türsystemen zugeordnet, und wurden bspw. in diesen weiteren Türsystemen bestimmt. Dies hat den Vorteil, dass auch Informationen, welche von (anderen) weiteren Türsystemen stammen, für die Anpassung der Türfunktion genutzt werden können. Insbesondere wird bei der Auswertung auch wenigstens eine Türsysteminformation (wie bspw. eine Antriebskennung der Antriebseinheit und/oder eine Türsystemkennung und/oder dergleichen) berücksichtigt, sodass insbesondere der Antriebsparameter einem bestimmten Türsystem zugeordnet werden kann.

Ferner kann vorgesehen sein, dass das Auswerten zumindest teilweise durch das Türsystem erfolgt, wobei vorzugsweise bei der Übertragung der zumindest eine Antriebsparameter durch eine Erkennungseinheit und/oder eine Übertragungseinheit des Türsystems empfangen wird, und bevorzugt anschließend ausgewertet wird, um die Anpassungsvorgabe zu bestimmen, wobei besonders bevorzugt die Anpassung anhand der Anpassungsvorgabe durch eine Kontrolleinheit des Türsystems erfolgt. Insbesondere können dabei auch Antriebsparameter durch das Türsystem empfangen werden, welche bspw. türsystemfern gespeichert und/oder bestimmt wurden, und/oder bei bzw. durch weitere Türsysteme bestimmt wurden. Dies hat den Vorteil, dass auch Informationen außerhalb des Türsystems für die Anpassung des Betriebs herangezogen werden können. Insbesondere kann somit (bspw. automatisiert) der Betrieb des Türsystems auf der Basis von Analysen, bspw. eines türsystemfernen Speichersystems, angepasst werden. Vorzugsweise können durch die Erkennungseinheit Umgebungsinformationen, bevorzugt Zeit- und/oder Wetterdaten und/oder dergleichen, empfangen werden, und/oder durch die Übertragungseinheit Antriebsparameter von der Kommunikationseinheit empfangen werden (bspw. auch Antriebsparameter mit Makros oder dergleichen zur Bereitstellung einer Konfigurationsvorgabe für das Türsystem).

Zudem ist denkbar, dass das Auswerten eine Analyse des übertragenen Antriebsparameters und/oder weiterer Antriebsparameter von weiteren Türsystemen umfasst, sodass vorzugsweise das Anpassen der Türfunktion mit weiteren Türsystemen korreliert ist. Insbesondere ergibt sich die Korrelation dadurch, dass der Betrieb auf Grundlage des Betriebs weiterer Türsysteme angepasst wird. So können bspw. Fehler, welche bei anderen weiteren Türsystemen aufgetreten sind, zur Verbesserung des Betriebs des Türsystems genutzt werden.

Es kann optional möglich sein, dass der zumindest eine Antriebsparameter durch eine tragbare Kommunikationseinheit, insbesondere einer Kommunikationseinheit zur Mobilfunkkommunikation, bestimmt wird, und/oder von der Kommunikationseinheit kabellos an eine Übertragungseinheit des Türsystems und/oder an ein türsystemfernes Speichersystem übertragen wird. Dies hat den Vorteil, dass zur Übertragung eine Kommunikationstechnologie der Kommunikationseinheit genutzt werden kann. Insbesondere können somit auch solche Antriebsparameter übertragen werden, welche wenigstens eine Anweisung (wie einen Steuerungsbefehl für die Kontrolleinheit) und/oder ein Makro (mit einer Folge von Anweisungen) und/oder dergleichen umfassen. Damit kann bspw. der Betrieb des Türsystems (z. B. gemäß einer Konfigurationsvorgabe) direkt angepasst werden und/oder eine Auswertung bei dem Speichersystems (z. B. eine Analyse der gespeicherten Antriebsparameter) parametrisiert werden.

Vorteilhaft ist es zudem, wenn der zumindest eine Antriebsparameter durch eine Erkennungseinheit des Türsystems bestimmt wird, vorzugsweise anhand einer Erfassung von wenigstens einer Sensorkomponente des Türsystems und/oder anhand einer kabellosen Erfassung, bevorzugt anhand einer Kommunikation über ein Netzwerk, insbesondere Internet, und/oder durch einen Empfang eines Funksignals, insbesondere Zeit- und/oder Ortungssignals. Insbesondere wird somit der Vorteil erzielt, dass beim Türsystem eine Vielzahl von Informationen zur Anpassung und/oder Verbesserung des Betriebs genutzt werden können. Bspw. können auch mehrere Antriebsparameter bestimmt werden, wobei einige kabellos und andere bspw. durch die Erfassung der Sensorkomponente bestimmt werden. Auch ist es denkbar, dass anhand der Erfassung von der Sensorkomponente z. B. Betriebsinformationen des Türsystems ermittelt werden, bspw. eine Information über eine Kraftausübung der Antriebseinheit und/oder der Türkomponente. Vorzugsweise kann wenigstens einer der Antriebsparameter anhand einer kabellosen Erfassung, bspw. über GPS (Global Positioning System) erfasst werden. Außerdem kann es möglich sein, dass ggf. wenigstens eine Fehlerinformation oder dergleichen durch die Erkennungseinheit erfasst wird, bspw. anhand einer Funktionsprüfung (insbesondere anhand eines Selbsttests) des Türsystems.

Es ist ferner denkbar, dass die Anpassungsvorgabe durch das Auswerten dadurch bestimmt wird, dass eine Vielzahl von Antriebsparametern des Türsystems und/oder weiterer Türsysteme analysiert werden, insbesondere türsystemfern, vorzugsweise durch das Speichersystem. Bspw. können somit auch Korrelationen der Türsysteme untereinander ausgewertet werden, um den Betrieb des Türsystems zu verbessern. Eine solche Korrelation ist bspw. eine Ausfallwahrscheinlichkeit (anhand von Fehlerinformationen der Türsysteme) oder dergleichen, sodass vorzugsweise anhand von Fehlerinformationen der Türsysteme eine Wartungsinformation für die Türsysteme bestimmt werden kann. Hierzu können bspw. die Fehlerinformationen verschiedener Türsysteme miteinander verglichen werden.

Außerdem kann es im Rahmen der Erfindung von Vorteil sein, dass das Anpassen der Türfunktion dadurch erfolgt, dass anhand der Anpassungsvorgabe eine Öffnungs- und/oder Schließzeit für die Türkomponente bestimmt wird. Vorzugsweise kann hierzu die Anpassungsvorgabe eine Konfigurationsvorgabe aufweisen, welche bspw. die entsprechende Zeitinformation (als programmierte Zeit für die Aktivierung der Türfunktion) umfasst. Somit kann in einfacher Weise das Türsystem programmiert werden.

Optional kann es vorgesehen sein, dass das Anpassen der Türfunktion automatisch oder in Abhängigkeit von einer Benutzereingabe, insbesondere bei einer Kommunikationseinheit, erfolgt, wobei vorzugsweise bei der Kommunikationseinheit wenigstens eine Information der Anpassungsvorgabe einem Benutzer angezeigt wird. Damit ist bspw. eine Überprüfung der Anpassungsvorgabe durch einen Benutzer möglich. Die Anpassungsvorgabe bzw. die angezeigte Information umfasst dabei bspw. die programmierten Zeiten (z. B. für die Aktivierung der Türfunktion) und/oder eine Anweisungsfolge für das Türsystem. Vorzugsweise kann die Anpassung anhand der Anpassungsvorgabe automatisch und/oder manuell (bspw. nach der Überprüfung) durch einen Benutzer initiiert werden.

Optional kann die Anpassungsvorgabe wenigstens eine der nachfolgenden Vorgaben zur Anpassung der Türfunktion aufweist:
- Anpassung anhand einer Wetterinformation, insbesondere sodass eine Schließkraft der Türkomponente anhand einer Windstärke als Wetterinformation angepasst wird,
- Anpassung anhand einer Personeninformation, insbesondere zur Parametrisierung einer Authentifizierung zur Nutzung der Türfunktion, vorzugsweise eines Öffnens der Türkomponente in Abhängigkeit von der Authentifizierung, wobei bevorzugt die Authentifizierung anhand einer Videoinformation durchgeführt wird,
- Anpassung anhand eines Nutzungszyklus des Türsystems, insbesondere anhand einer Nutzungszyklusanzahl und/oder Nutzungszyklushäufigkeit,
- Anpassung anhand einer Zeitinformation, vorzugsweise zur Bestimmung von Schließ- und/oder Öffnungszeiten der Türkomponente,
- Anpassung anhand einer Betriebsinformation des Türsystems, vorzugsweise zur Bereitstellung eines dauerhaften Verschließens und/oder eines dauerhaften Öffnens und/oder eines einseitigen Verriegelns und/oder Entriegelns der Türkomponente,
- Anpassung anhand einer Fehlerinformation, vorzugsweise zum dauerhaften Öffnen oder Verschließen im Fehlerfall und/oder zur Initiierung einer Funktionsprüfung.

Insbesondere dient dabei die Videoinformation zur Gesichtserkennung, um so bspw. eine Sicherheit bei dem Türsystem zu verbessern. Bspw. kann das Aktivieren wenigstens einer der Türfunktionen in Abhängigkeit von der Videoinformation erfolgen. Weiter ist es auch denkbar, dass das Anpassen anhand einer aufgezeichneten Nutzungszyklushäufigkeit erfolgt, z. B. Initiieren eines Energiesparmodus zu bestimmten Tageszeiten, bei welchen die Nutzungszyklushäufigkeit niedrig ist. Des Weiteren kann bspw. auch eine Betriebsinformation genutzt werden, welche vorzugsweise das Türsystem für einen bestimmten Betrieb anpasst, bspw. einen Kindergartenbetrieb mit (z. B. auch einseitiger) Verriegelung und/oder Freischaltung der Tür durch Nottaster oder dergleichen.

Ebenfalls Gegenstand der Erfindung ist ein Anpassungssystem zur Anpassung eines Betriebs wenigstens eines Türsystems, mit:
- wenigstens einer Türkomponente des Türsystems und zumindest einer Antriebseinheit des Türsystems, wobei die Antriebseinheit mit der Türkomponente in Wirkverbindung steht, um die Türkomponente zur Durchführung mindestens einer Türfunktion in wenigstens einen Bewegungszustand zu bringen,
- wenigstens einer Kontrolleinheit des Türsystems zur Kontrolle der Türfunktion, wobei vorzugweise die Kontrolle anhand wenigstens einer Anpassungsvorgabe anpassbar ist, insbesondere durch eine Kontrolle (Ansteuerung und/oder Regelung) einer Antriebseinheit des Türsystems durch die Kontrolleinheit anhand der Anpassungsvorgabe,
wobei vorzugsweise die Anpassungsvorgabe durch das Anpassungssystem anhand wenigstens eines kabellos übertragenen Antriebsparameters bestimmbar ist.

Das erfindungsgemäße Anpassungssystem bringt die gleichen Vorteile mit sich, wie sie ausführlich mit Bezug auf ein erfindungsgemäßes Verfahren beschrieben worden sind. Zudem kann das Anpassungssystem gemäß einem erfindungsgemäßen Verfahren betreibbar ausgeführt sein. Außerdem kann eine Verarbeitungskomponente des Anpassungssystems vorgesehen sein, welche zumindest teilweise zur Durchführung eines erfindungsgemäßen Verfahrens ausgeführt ist.

Insbesondere umfasst hierbei die Kontrolle das Steuern und/oder Regeln und/oder Anpassen, insbesondere der Türfunktion, vorzugsweise durch eine entsprechende (elektrische) Ansteuerung einer Antriebseinheit.

Es kann von Vorteil sein, wenn im Rahmen der Erfindung zumindest eine Übertragungseinheit des Türsystems vorgesehen ist, welche zum kabellosen Übertragen des wenigstens einen Antriebsparameters und/oder der Anpassungsvorgabe ausgeführt ist. Damit ist eine einfache und schnelle Übertragung gewährleistet.

In einer weiteren Möglichkeit kann vorgesehen sein, dass eine tragbare Kommunikationseinheit, insbesondere zur Mobilfunkkommunikation, vorgesehen ist, welche vorzugsweise zum kabellosen Übertragen des wenigstens einen Antriebsparameters an ein türsystemfernes Speichersystem (und/oder an das Türsystem) ausgeführt ist, sodass vorzugsweise der Antriebsparameter türsystemfern (bzw. beim Türsystem) bereitstellbar ist. Somit kann die Flexibilität beim Betrieb des Türsystems weiter verbessert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: eine Ansicht von Teilen eines Anpassungssystems mit Teilen eines Türsystems zur Visualisierung eines erfindungsgemäßen Verfahrens,
- Fig. 2: eine weitere Ansicht von Teilen eines Anpassungssystems,
- Fig. 3: eine weitere Ansicht von Teilen eines Anpassungssystems,
- Fig. 4: eine Darstellung von Teilen einer Kommunikationseinheit,
- Fig. 5: eine Darstellung von Teilen einer Erkennungseinheit,
- Fig. 6: eine Darstellung eines Speichersystems,
- Fig. 7: eine Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

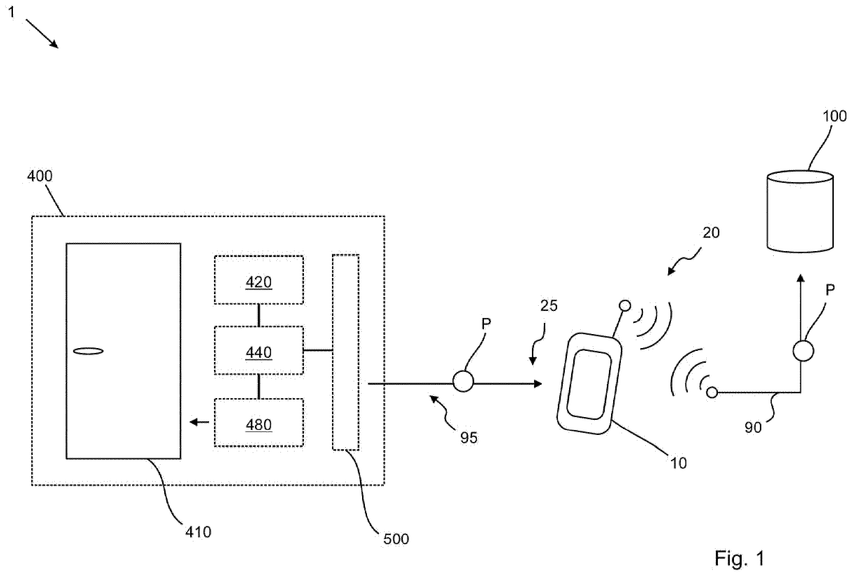

In Figur 1 ist schematisch ein Türsystem 400 sowie wenigstens teilweise ein erfindungsgemäßes Anpassungssystem 1 zur Visualisierung eines erfindungsgemäßen Verfahrens gezeigt.

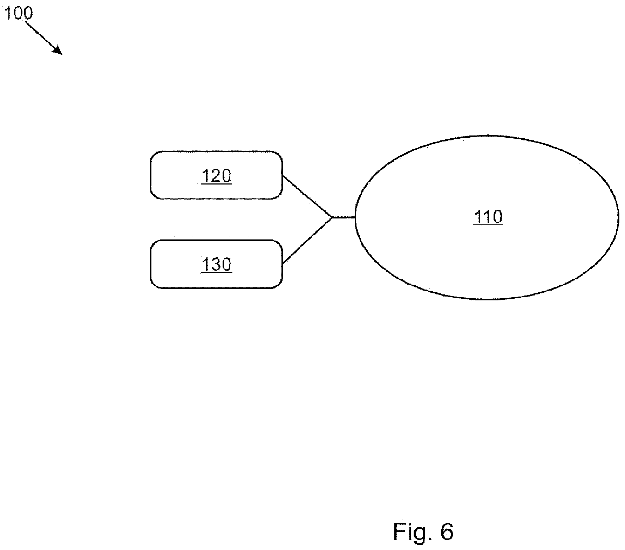

Insbesondere umfasst das Anpassungssystem 1 zumindest ein nichtflüchtiges Speichersystem 100. Weiter kann das Anpassungssystem 1 zumindest eine Speichereinheit 110 und/oder zumindest eine Schnittstelleneinheit 120 und/oder zumindest eine Auswerteeinheit 130 umfassen. Die Speichereinheit 110, die Schnittstelleneinheit 120 und die Auswerteeinheit 130 können dabei jeweils auch Teil des Speichersystems 100 sein, wie in Figur 6 verdeutlicht ist.

Das Speichersystem 100 ist dabei bspw. als ein Datenbanksystem oder als Datenverarbeitungsanlage (mit einem oder mehreren Computern) zur Bereitstellung des Datenbanksystems ausgeführt, wobei vorzugsweise die Speichereinheit 110 als relationale Datenbank des Datenbanksystems bzw. als nicht-flüchtiger Datenspeicher der Datenverarbeitungsanlage ausgeführt ist.

Optional kann das Anpassungssystem 1 auch eine Kommunikationseinheit 10 und/oder Teile des Türsystems 400 umfassen. Die Kommunikationseinheit 10 ist bspw. als ein Mobilfunkgerät, insbesondere ein Smartphone, ausgeführt. Bspw. erfolgt dabei eine Funkkommunikation durch eine Funkübertragungsschnittstelle 20 der Kommunikationseinheit 10, um so Daten an ein Netzwerk 90, bspw. Mobilfunknetz, zu senden. Hierdurch ist insbesondere eine kabellose Datenübertragung des wenigstens einen Antriebsparameters P von dem Türsystem 400 an das türsystemferne Speichersystem 100 und/oder umgekehrt möglich, wobei das Speichersystem 100 vorzugsweise ebenfalls mit dem Netzwerk 90 direkt oder indirekt (bspw. über weitere Netzwerke) verbunden sein kann.

Des Weiteren kann die Kommunikationseinheit 10 wenigstens eine Kommunikationsschnittstelle 25 aufweisen, um eine weitere Kommunikation, insbesondere Funkkommunikation, vorzugsweise Bluetooth-Kommunikation, durchzuführen. Diese kann dann bspw. zum Datenaustausch über eine Bluetooth-Verbindung 95 mit einer Übertragungseinheit 500 des Türsystems 400 genutzt werden. Insbesondere kann über die Bluetooth-Verbindung 95 wenigstens ein Antriebsparameter P ausgetauscht werden. Dieser Antriebsparameter P kann dann bspw. über das Netzwerk 90 weiter an das türsystemferne Speichersystem 100 übertragen werden.

Das Türsystem 400 umfasst z. B. wenigstens eine Türkomponente 410, insbesondere ein bewegbares Türblatt. Die Türkomponente 410 kann durch eine Antriebseinheit 480 bewegt werden, wobei die Antriebseinheit 480 durch eine Kontrolleinheit 420 kontrolliert, d. h. bspw. angesteuert, werden kann. Auf diese Weise kann wenigstens eine Türfunktion bereitgestellt werden, bspw. ein Öffnen der Türkomponente 410. Weitere Türfunktionen sind bspw. das Verriegeln der Tür (z. B. zu bestimmten Zeiten) oder dergleichen. Insbesondere kann eine Erkennungseinheit 440 des Türsystems 400 genutzt werden, um wenigstens einen Antriebsparameter P zu bestimmen, welcher mit der Türfunktion korreliert ist. Dieser Antriebsparameter P kann dann ggf. über die Übertragungseinheit 500 an die Kommunikationseinheit 10 übertragen werden, und anschließend über das Netzwerk 90 an das türsystemferne Speichersystem 100.

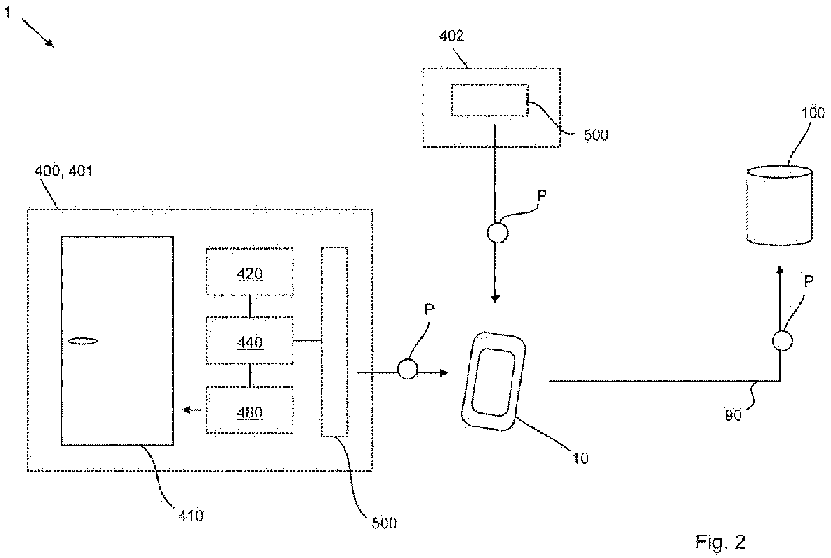

Wie in Figur 2 gezeigt ist, kann dabei die Kommunikationseinheit 10 als tragbare Kommunikationseinheit 10 ausgeführt sein, und ggf. den Empfang und/oder die Übertragung von mehreren Antriebsparametern P durchführen, welche von unterschiedlichen Türsystemen 400 stammen. So kann bspw. sowohl ein erstes Türsystem 401 als auch ein zweites Türsystem 402 vorgesehen sein, welche über jeweilige Übertragungseinheiten 500 eine jeweilige Verbindung, insbesondere Bluetooth-Verbindung 95, mit der Kommunikationseinheit 10 aufbauen können. Bspw. ist der Verbindungsaufbau nur dann möglich, wenn die tragbare Kommunikationseinheit 10 in Kommunikationsreichweite zu den jeweiligen Übertragungseinheiten 500 ist.

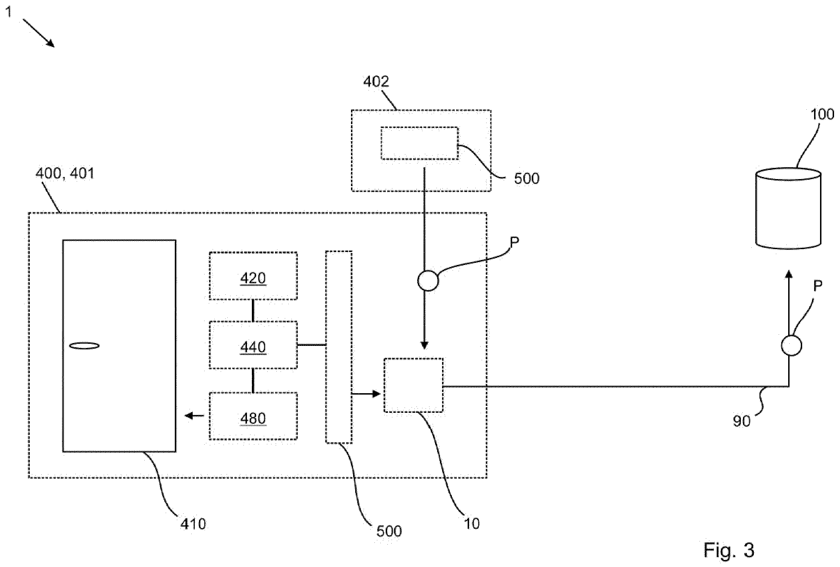

In Figur 3 ist schematisch gezeigt, dass die Kommunikationseinheit 10 auch im Türsystem 400 (d. h. in wenigstens einem der Türsysteme 400) integriert sein kann. Auch in diesem Fall kann es möglich sein, dass ein weiteres Türsystem 402 mit der Kommunikationseinheit 10 des ersten Türsystems 401 kommuniziert und/oder Antriebsparameter P zu diesem überträgt. Auf diese Weise kann eine kostengünstige und zuverlässige Vernetzung der Türsysteme erfolgen, um Antriebsparameter P an ein türsystemfernes Speichersystem 100 zu übertragen.

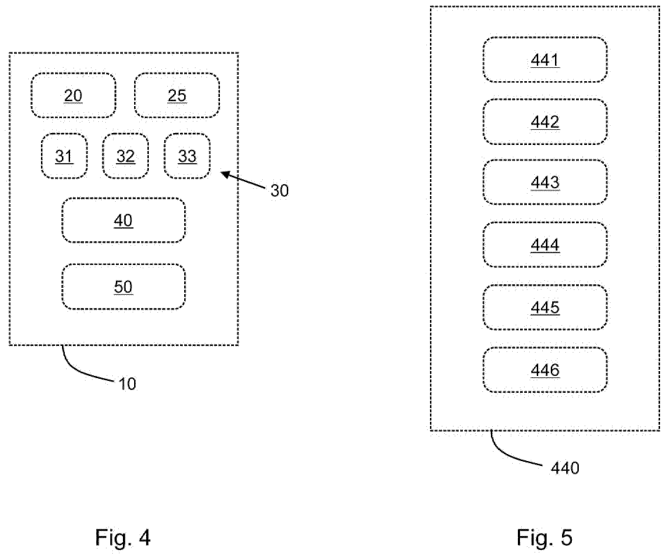

Figur 4 zeigt schematisch (zumindest teilweise) den Aufbau einer Kommunikationseinheit 10. Dabei umfasst die Kommunikationseinheit 10 bspw. wenigstens eine Funkübertragungsschnittstelle 20 und/oder wenigstens eine Kommunikationsschnittstelle 25 und/oder wenigstens einen Sensor 30, insbesondere wenigstens einen Kamerasensor 31 und/oder wenigstens einen Ortungssensor 32 und/oder wenigstens einen Beschleunigungssensor 33, und/oder wenigstens ein Verarbeitungsmittel 40 und/oder wenigstens einen Datenspeicher 50, welche ggf. (zumindest teilweise) elektrisch oder elektronisch miteinander verbunden sind.

In Figur 5 ist ein schematischer zumindest teilweiser Aufbau einer Erkennungseinheit 440 dargestellt. Diese kann bspw. eine Speicherkomponente 441 und/oder eine Ortungskomponente 442 und/oder eine Empfangskomponente 443 und/oder eine Verarbeitungskomponente 444 und/oder eine Sensorkomponente 445 und/oder eine Zählerkomponente 446 aufweisen, welche zumindest teilweise miteinander elektrisch oder elektronisch verbunden sein können.

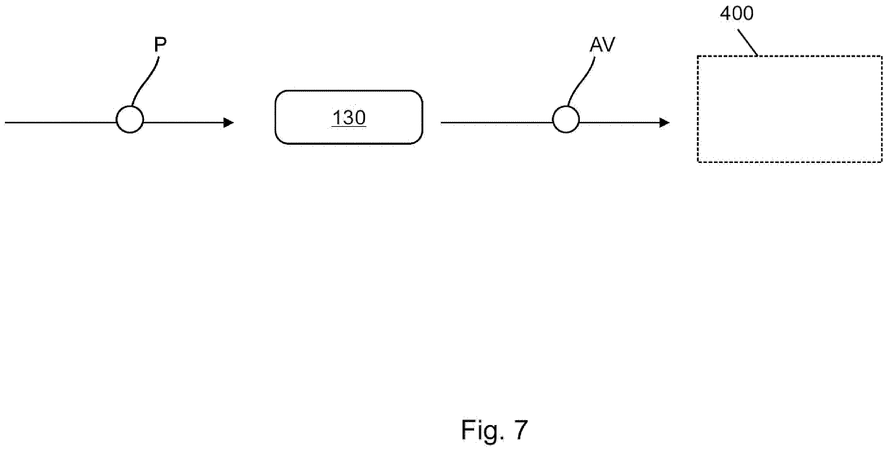

In Figur 7 ist schematisch ein erfindungsgemäßes Verfahren visualisiert. Dabei ist dargestellt, dass gemäß einem ersten Verfahrensschritt ein Übertragen von zumindest einem Antriebsparameter P erfolgen kann, insbesondere an eine Auswerteeinheit 130, wobei das Übertragen zumindest teilweise kabellos erfolgt. Gemäß einem zweiten Verfahrensschritt kann ein Auswerten zumindest des übertragenen Antriebsparameters P durchgeführt werden, insbesondere durch die Auswerteeinheit 130, sodass eine Anpassungsvorgabe AV bestimmt wird. Anschließend kann gemäß einem dritten Verfahrensschritt ein Anpassen der mindestens einen Türfunktion anhand der Anpassungsvorgabe AV bei dem Türsystem 400 erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Anpassungssystem

- 10: Kommunikationseinheit

- 20: Funkübertragungsschnittstelle
- 25: Kommunikationsschnittstelle

- 30: Sensor
- 31: Kamerasensor
- 32: Ortungssensor
- 33: Beschleunigungssensor

- 40: Verarbeitungsmittel

- 50: Datenspeicher

- 90: Netzwerk
- 95: Bluetooth-Verbindung

- 100: Speichersystem
- 110: Speichereinheit

- 120: Schnittstelleneinheit
- 130: Auswerteeinheit

- 400: Türsystem
- 401: erstes Türsystem
- 402: weitere Türsysteme
- 410: Türkomponente

- 420: Kontrolleinheit

- 440: Erkennungseinheit
- 441: Speicherkomponente
- 442: Ortungskomponente
- 443: Empfangskomponente
- 444: Verarbeitungskomponente
- 445: Sensorkomponente
- 446: Zählerkomponente

- 480: Antriebseinheit

- 500: Übertragungseinheit

- AV: Anpassungsvorgabe
- P: Antriebsparameter

## Patentansprüche

1. Verfahren zur Anpassung eines Betriebs wenigstens eines Türsystems (400), wobei das Türsystem (400) wenigstens eine zumindest teilweise automatisiert betriebene Türkomponente (410) zur Durchführung mindestens einer Türfunktion sowie wenigstens eine Antriebseinheit (480) aufweist, wobei die Türkomponente (410) als bewegbares Türblatt einer Personentür ausgeführt ist, wobei die Antriebseinheit (480) mit der Türkomponente (410) in Wirkverbindung steht, um die Türkomponente (410) zur Durchführung der wenigstens einen Türfunktion in wenigstens einen Bewegungszustand zu bringen, wobei das Türsystem (400) eine Kontrolleinheit (420) zur Kontrolle zumindest der Türfunktion aufweist, und wobei das Türsystem (400) wenigstens eine Erkennungseinheit (440) zum Bestimmen von wenigstens einem Antriebsparameter (P) aufweist, wobei zumindest ein durch die Erkennungseinheit (440) bestimmter Antriebsparameter (P) entweder durch die Erkennungseinheit (440) oder durch eine Übertragungseinheit (500) des Türsystems (400) und/oder eine Kommunikationseinheit des Türsystems (400) kabellos an ein türsystemfernes Speichersystem übertragen wird, wobei zumindest der übertragene Antriebsparameters (P) ausgewertet wird, sodass eine Anpassungsvorgabe (AV) bestimmt wird, wobei die mindestens eine Türfunktion anhand der Anpassungsvorgabe (AV) durch die Kontrolleinheit (420) angepasst wird, wobei das Auswerten zumindest teilweise türsystemfern erfolgt, wobei hierzu der zumindest eine Antriebsparameter (P) bei der kabellosen Übertragung durch das türsystemferne Speichersystem (100) empfangen und persistent gespeichert wird, und durch eine Auswerteeinheit (130) ausgelesen und ausgewertet wird, um die Anpassungsvorgabe (AV) zu bestimmen, wobei die bestimmte Anpassungsvorgabe (AV) kabellos an das Türsystem (400) übertragen wird, sodass bei dem Türsystem (400) das Anpassen der Türfunktion erfolgen kann, **dadurch gekennzeichnet, dass** der Antriebsparameter (P) mit einer Umgebungstemperatur der Türkomponente (410) korreliert ist.

2. Verfahren nach Anspruch 1,
**dadurch gekennzeichnet,**
**dass** das Auswerten zumindest teilweise durch das Türsystem (400) erfolgt, wobei vorzugsweise bei der Übertragung der zumindest eine Antriebsparameter (P) durch eine Erkennungseinheit (440) und/oder eine Übertragungseinheit (500) des Türsystems (400) empfangen wird, und vorzugsweise anschließend ausgewertet wird, um die Anpassungsvorgabe (AV) zu bestimmen, wobei bevorzugt die Anpassung anhand der Anpassungsvorgabe (AV) durch eine Kontrolleinheit (420) des Türsystems (400) erfolgt.

3. Verfahren nach Anspruch 1 oder 2,
**dadurch gekennzeichnet,**
**dass** das Auswerten eine Analyse des übertragenen Antriebsparameters (P) und weiterer Antriebsparameter (P) von weiteren Türsystemen (400) umfasst, sodass vorzugsweise das Anpassen der Türfunktion mit weiteren Türsystemen (400) korreliert ist.

4. Verfahren nach einem der vorhergehenden Ansprüche,
**dadurch gekennzeichnet,**
**dass** der zumindest eine Antriebsparameter (P) durch eine tragbare Kommunikationseinheit (10), insbesondere zur Mobilfunkkommunikation, bestimmt wird, und/oder von der Kommunikationseinheit (10) kabellos an eine Übertragungseinheit (500) des Türsystems (400) und an ein türsystemfernes Speichersystem (100) übertragen wird.

5. Verfahren nach einem der Ansprüche 1 bis 3,
**dadurch gekennzeichnet,**
**dass** der zumindest eine Antriebsparameter (P) durch eine Erkennungseinheit (440) des Türsystems (400) bestimmt wird, vorzugsweise anhand einer Erfassung von wenigstens einer Sensorkomponente (445) des Türsystems (400) und/oder anhand einer kabellosen Erfassung, bevorzugt anhand einer Kommunikation über ein Netzwerk, insbesondere Internet, und/oder durch einen Empfang eines Funksignals, insbesondere Zeit- und/oder Ortungssignals.

6. Verfahren nach einem der vorhergehenden Ansprüche,
**dadurch gekennzeichnet,**
**dass** die Anpassungsvorgabe (AV) durch das Auswerten dadurch bestimmt wird, dass eine Vielzahl von Antriebsparametern des Türsystems (400) und/oder weiterer Türsysteme (400) analysiert werden, insbesondere türsystemfern.

7. Verfahren nach einem der vorhergehenden Ansprüche,
**dadurch gekennzeichnet,**
**dass** das Anpassen der Türfunktion dadurch erfolgt, dass anhand der Anpassungsvorgabe (AV) eine Öffnungs- und/oder Schließzeit für die Türkomponente (410) bestimmt wird.

8. Verfahren nach einem der vorhergehenden Ansprüche,
**dadurch gekennzeichnet,**
**dass** das Anpassen der Türfunktion automatisch oder in Abhängigkeit von einer Benutzereingabe, insbesondere bei einer Kommunikationseinheit (10), erfolgt, wobei vorzugsweise bei der Kommunikationseinheit (10) wenigstens eine Information der Anpassungsvorgabe (AV) einem Benutzer angezeigt wird.

9. Anpassungssystem (1) zur Anpassung eines Betriebs wenigstens eines Türsystems (400), mit dem Türsystem (400) aufweisend: wenigstens einer Türkomponente (410), wobei die Türkomponente (410) als bewegbares Türblatt einer Personentür ausgeführt ist und zumindest einer Antriebseinheit (480) des Türsystems (400), wobei die Antriebseinheit (480) mit der Türkomponente (410) in Wirkverbindung steht, um die Türkomponente (410) zur Durchführung mindestens einer Türfunktion in wenigstens einen Bewegungszustand zu bringen, wenigstens einer Kontrolleinheit (420) des Türsystems (400) zur Kontrolle der Türfunktion, wobei die Kontrolle anhand wenigstens einer Anpassungsvorgabe (AV) anpassbar ist, wobei das Türsystem (400) wenigstens eine Erkennungseinheit (440) zum Bestimmen von wenigstens einem Antriebsparameter (P) aufweist,
wobei die Anpassungsvorgabe (AV) durch das Anpassungssystem (1) anhand des wenigstens einen entweder durch die Erkennungseinheit (440) oder durch eine Übertragungseinheit (500) des Türsystems (400) und/oder eine Kommunikationseinheit des Türsystems (400) kabellos übertragenen Antriebsparameters (P) bestimmbar ist,
wobei der zumindest eine Antriebsparameter (P) durch ein türsystemfernes Speichersystem (100) empfangbar und persistent speicherbar ist und durch eine Auswerteeinheit (130) zumindest teilweise türsystemfern auswertbar ist, um die Anpassungsvorgabe (AV) zu bestimmen, **dadurch gekennzeichnet, dass** der Antriebsparameter (P) mit einer Umgebungstemperatur der Türkomponente (410) korreliert ist.

10. Anpassungssystem (1) nach Anspruch 9,
**dadurch gekennzeichnet,**
**dass** zumindest eine Übertragungseinheit (500) des Türsystems (400) vorgesehen ist, welche zum kabellosen Übertragen des wenigstens einen Antriebsparameters (P) ausgeführt ist.

11. Anpassungssystem (1) nach Anspruch 9 oder 10,
**dadurch gekennzeichnet,**
**dass** das Anpassungssystem (1) eine tragbare Kommunikationseinheit (10), insbesondere zur Mobilfunkkommunikation, aufweist, welche zum kabellosen Übertragen des wenigstens einen Antriebsparameters (P) an ein türsystemfernes Speichersystem (100) ausgeführt ist, sodass vorzugsweise der Antriebsparameter (P) türsystemfern bereitstellbar ist.

## Claims

1. A method for adjusting an operation of at least one door system (400), wherein the door system (400) has at least one at least partially automatically operated door component (410) for carrying out at least one door function and at least one drive unit (480), wherein the door component (410) is designed as a movable door leaf of a door for people, wherein the drive unit (480) is operatively connected to the door component (410) in order to bring the door component (410) into at least one movement state for carrying out the at least one door function, wherein the door system (400) has a control unit (420) for controlling at least the door function, and wherein the door system (400) has at least one detection unit (440) for determining at least one drive parameter (P), wherein at least one drive parameter (P) determined by the detection unit (440) is transmitted wirelessly either by the detection unit (440) or by a transmission unit (500) of the door system (400) and/or a communication unit of the door system (400) to a memory system remote from the door system, wherein at least the transmitted drive parameter (P) is evaluated such that an adjustment specification (AV) is determined, wherein the at least one door function is adjusted by the control unit (420) based on the adjustment specification (AV), wherein the evaluation takes place at least partially remote from the door system, wherein for this purpose the at least one drive parameter (P) is received during the wireless transmission by the memory system (100) remote from the door system and stored persistently, and is read out and evaluated by an evaluation unit (130) in order to determine the adjustment specification (AV), wherein the determined adjustment specification (AV) is transmitted wirelessly to the door system (400) such that the door function can be adjusted in the door system (400), **characterized in that** the drive parameter (P) is correlated with an ambient temperature of the door component (410).

2. The method according to claim 1,
**characterized in**
**that** the evaluation is carried out at least partially by the door system (400), wherein preferably during the transmission, the at least one drive parameter (P) is received by a detection unit (440) and/or a transmission unit (500) of the door system (400), and preferably is subsequently evaluated in order to determine the adjustment specification (AV), wherein preferably the adjustment is carried out based on the adjustment specification (AV) by a control unit (420) of the door system (400).

3. The method according to claim 1 or 2,
**characterized in**
**that** the evaluation comprises an analysis of the transmitted drive parameter (P) and further drive parameters (P) of further door systems (400) such that preferably the adjustment of the door function is correlated with further door systems (400).

4. The method according to one of the preceding claims,
**characterized in**
**that** the at least one drive parameter (P) is determined by a portable communication unit (10), in particular for mobile radio communication, and/or is transmitted wirelessly from the communication unit (10) to a transmission unit (500) of the door system (400) and to a memory system (100) remote from the door system.

5. The method according to one of claims 1 to 3,
**characterized in**
**that** the at least one drive parameter (P) is determined by a detection unit (440) of the door system (400), preferably based on capturing by at least one sensor component (445) of the door system (400) and/or based on wireless capturing, preferably based on communication via a network, in particular the Internet, and/or by receiving a radio signal, in particular a time and/or location signal.

6. The method according to one of the preceding claims,
**characterized in**
**that** the adjustment specification (AV) is determined by evaluating by analyzing a plurality of drive parameters of the door system (400) and/or other door systems (400), in particular remote from the door system.

7. The method according to one of the preceding claims,
**characterized in**
**that** the adjustment of the door function is carried out by determining an opening and/or closing time for the door component (410) based on the adjustment specification (AV).

8. The method according to one of the preceding claims,
**characterized in**
**that** the adjustment of the door function takes place automatically or depending on a user input, in particular in a communication unit (10), wherein preferably in the communication unit (10) at least one item of information of the adjustment specification (AV) is displayed to a user.

9. An adjustment system (1) for adjusting an operation of at least one door system (400), with the door system (400) having:
at least one door component (410), wherein the door component (410) is designed as a movable door leaf of a door for people and at least one drive unit (480) of the door system (400), wherein the drive unit (480) is operatively connected to the door component (410) in order to bring the door component (410) into at least one movement state for carrying out at least one door function, at least one control unit (420) of the door system (400) for controlling the door function, wherein the control can be adjusted based on at least one adjustment specification (AV),
wherein the door system (400) has at least one detection unit (440) for determining at least one drive parameter (P),
wherein the adjustment specification (AV) can be determined by the adjustment system (1) based on the at least one drive parameter (P) transmitted wirelessly either by the detection unit (440) or by a transmission unit (500) of the door system (400) and/or a communication unit of the door system (400),
wherein the at least one drive parameter (P) can be received and persistently stored by a memory system (100) remote from the door system and can be evaluated at least partially remote from the door system by an evaluation unit (130) in order to determine the adjustment specification (AV), **characterized in that** the drive parameter (P) is correlated with an ambient temperature of the door component (410).

10. The adjustment system (1) according to claim 9,
**characterized in**
**that** at least one transmission unit (500) of the door system (400) is provided, which is designed for wireless transmission of the at least one drive parameter (P).

11. The adjustment device (1) according to claim 9 or 10,
**characterized in**
**that** the adjustment system (1) has a portable communication unit (10), in particular for mobile radio communication, which is designed for wireless transmission of the at least one drive parameter (P) to a memory system (100) remote from the door system such that preferably the drive parameter (P) can be provided remotely from the door system.

## Revendications

1. Procédé d'adaptation d'un fonctionnement d'au moins un système de porte (400), dans lequel le système de porte (400) présente au moins un composant de porte (410) à fonctionnement au moins partiellement automatisé pour l'exécution d'au moins une fonction de porte et au moins une unité d'entraînement ( 480), dans lequel le composant de porte (410) est réalisé comme un vantail mobile d'une porte pour piétons, dans lequel l'unité d'entraînement (480) est en liaison active avec le composant de porte (410) afin d'amener le composant de porte (410) dans au moins un état de mouvement pour l'exécution de l'au moins une fonction de porte, dans lequel le système de porte (400) présente une unité de commande (420) pour la commande d'au moins la fonction de porte, et dans lequel le système de porte (400) présente au moins une unité de détection (440) pour la détermination d'au moins un paramètre d'entraînement (P), dans lequel au moins un paramètre d'entraînement (P) déterminé par l'unité de détection (440) est transmis soit par l'unité de détection (440), soit par une unité de transmission (500) du système de porte (400) et/ou une unité de communication du système de porte (400) sans fil à un système de stockage distant du système de porte, dans lequel au moins le paramètre d'entraînement (P) transmis est évalué, de sorte qu'une spécification d'adaptation (AV) est déterminée, dans lequel l'au moins une fonction de porte est adaptée par l'unité de commande (420) sur la base de la spécification d'adaptation (AV), dans lequel l'évaluation est réalisée au moins en partie à distance du système de porte, dans lequel dans ce but l'au moins un paramètre d'entraînement (P) est reçu et mémorisé de manière persistante lors de la transmission sans fil par le système de stockage (100) distant du système de porte, et est lu et évalué par une unité d'évaluation (130) afin de déterminer la spécification d'adaptation (AV), dans lequel la spécification d'adaptation (AV) déterminée est transmise sans fil au système de porte (400), de sorte que dans le système de porte (400), l'adaptation de la fonction de porte peut être effectuée, **caractérisé en ce que** le paramètre d'entraînement (P) est corrélé à une température ambiante du composant de porte (410).

2. Procédé selon la revendication 1,
**caractérisé,**
**en ce que** l'évaluation est effectuée au moins en partie par le système de porte (400), dans lequel, de préférence, pendant la transmission, l'au moins un paramètre d'entraînement (P) est reçu par une unité de détection (440) et/ou une unité de transmission (500) du système de porte (400) et est de préférence ensuite évalué pour déterminer la spécification d'adaptation (AV), dans lequel l'adaptation est réalisée de préférence sur la base de la spécification d'adaptation (AV) par une unité de commande (420) du système de porte (400).

3. Procédé selon la revendication 1 ou 2,
**caractérisé,**
**en ce que** l'évaluation comprend une analyse du paramètre d'entraînement (P) transmis et d'autres paramètres d'entraînement (P) d'autres systèmes de porte (400), de sorte que l'adaptation de la fonction de porte est de préférence corrélée à d'autres systèmes de porte (400).

4. Procédé selon l'une des revendications précédentes,
**caractérisé,**
**en ce que** l'au moins un paramètre d'entraînement (P) est déterminé par une unité de communication portable (10), en particulier pour la communication radio mobile, et/ou transmis par l'unité de communication (10) sans fil à une unité de transmission (500) du système de porte (400) et à un système de stockage (100) distant du système de porte.

5. Procédé selon l'une des revendications 1 à 3,
**caractérisé,**
**en ce que** l'au moins un paramètre d'entraînement (P) est déterminé par une unité de détection (440) du système de porte (400), de préférence sur la base d'une détection d'au moins un composant de capteur (445) du système de porte (400) et /ou sur la base d'une détection sans fil, de préférence sur la base d'une communication par l'intermédiaire d'un réseau, notamment Internet, et/ou par une réception d'un signal radio, notamment un signal horaire et/ou de localisation.

6. Procédé selon l'une des revendications précédentes,
**caractérisé,**
**en ce que** la spécification d'adaptation (AV) est déterminée par l'évaluation en ce qu'une pluralité de paramètres d'entraînement du système de porte (400) et/ou d'autres systèmes de porte (400) sont analysés, en particulier à distance du système de porte.

7. Procédé selon l'une des revendications précédentes,
**caractérisé,**
**en ce que** l'adaptation de la fonction de porte est effectuée en déterminant un temps d'ouverture et/ou de fermeture pour le composant de porte (410) sur la base de la spécification d'adaptation (AV).

8. Procédé selon l'une des revendications précédentes,
**caractérisé,**
**en ce que** l'adaptation de la fonction de porte est effectuée automatiquement ou en fonction d'une entrée de l'utilisateur, en particulier dans une unité de communication (10), dans lequel au moins une information de la spécification d'adaptation (AV) est de préférence affichée à un utilisateur dans l'unité de communication (10).

9. Système d'adaptation (1) pour l'adaptation d'un fonctionnement d'au moins un système de porte (400), le système de porte (400) présentant :
au moins un composant de porte (410), dans lequel le composant de porte (410) est réalisé comme vantail mobile d'une porte pour piétons et au moins une unité d'entraînement (480) du système de porte (400), dans lequel l'unité d'entraînement (480) est en liaison active avec le composant de porte (410) pour amener le composant de porte (410) dans au moins un état de mouvement pour l'exécution d'au moins une fonction de porte, au moins une unité de commande (420) du système de porte (400) pour la commande de la fonction de porte, dans lequel la commande est adaptable sur la base d'au moins une spécification d'adaptation (AV),
dans lequel le système de porte (400) présente au moins une unité de détection (440) pour la détermination d'au moins un paramètre d'entraînement (P),
dans lequel la spécification d'adaptation (AV) peut être déterminée par le système d'adaptation (1) sur la base de l'au moins un paramètre d'entraînement (P) transmis sans fil soit par l'unité de détection (440), soit par une unité de transmission (500) du système de porte ( 400) et/ou une unité de communication du système de porte (400),
dans lequel l'au moins un paramètre d'entraînement (P) peut être reçu et mémorisé de manière persistante par un système de stockage (100) distant du système de porte et peut être au moins partiellement évalué à distance du système de porte par une unité d'évaluation (130) afin de déterminer la spécification d'adaptation (AV), **caractérisé en ce que** le paramètre d'entraînement (P) est corrélé à une température ambiante du composant de porte (410).

10. Système d'adaptation (1) selon la revendication 9,
**caractérisé,**
**en ce qu'**il est prévu au moins une unité de transmission (500) du système de porte (400), laquelle est réalisée pour la transmission sans fil de l'au moins un paramètre d'entraînement (P).

11. Système d'adaptation (1) selon la revendication 9 ou 10,
**caractérisé,**
**en ce que** le système d'adaptation (1) présente une unité de communication portable (10), en particulier pour la communication radio mobile, qui est réalisée pour la transmission sans fil de l'au moins un paramètre d'entraînement (P) à un système de stockage (100) distant du système de porte, de sorte que le paramètre d'entraînement (P) peut de préférence être fourni à distance du système de porte.
